# EUROPÄISCHE PATENTSCHRIFT

(11) **EP 3 891 674 B1**
(45) Veröffentlichungstag und Bekanntmachung des Hinweises auf die Patenterteilung: **25.12.2024**
(21) Anmeldenummer: 19806282.0
(22) Anmeldetag: 27.11.2019
(51) Int. Cl.: G06Q 10/0833

(54) **VERFOLGUNG EINES KOLLEKTIVS VON OBJEKTEN**
TRACKING OF A GROUP OF OBJECTS
POURSUITE D'UN COLLECTIF D'OBJETS

(30) Priorität: 03.12.2018 EP 18209716
(43) Veröffentlichungstag der Anmeldung: 13.10.2021
(73) Patentinhaber: Bayer Aktiengesellschaft, 51373 Leverkusen (DE)
(72) Erfinder: DEMMER, Johannes, 42553 Velbert (DE)
(74) Vertreter: BIP Patents
(86) Internationale Anmeldenummer: PCT/EP2019/082651
(87) Internationale Veröffentlichungsnummer: WO 2020/114841

(56) Entgegenhaltungen:
- WO-A1-2009/088538
- US-A1- 2007 258 048
- US-A1- 2013 135 083

## Beschreibung

Die vorliegende Erfindung befasst sich mit der Verfolgung von Objekten. Gegenstände der vorliegenden Erfindung sind ein Verfahren, ein System und ein Computerprogrammprodukt zur Verfolgung von Objekten.

US2007258048A1 offenbart Mittel zur Überwachung des Verfallsdatums von verderblichen Produkten. US2013135083A1 offenbart ein System und ein Verfahren zur Artikelverfolgung mit RFID-Etiketten. WO2009/088538A1 offenbart eine Vorrichtung, ein System und ein Verfahren zur Frachtverfolgung.

Die Verfolgung und Überwachung von Objekten spielt in vielen Bereichen der Wirtschaft eine große Rolle. Als Beispiel sei die Verfolgung von Waren, insbesondere von pharmazeutischen Produkten angeführt. Pharmazeutische Produkte unterliegen weltweit einer Reihe von behördlichen Regularien. Dazu zählt in einigen Staaten die Anforderung, eine Rückverfolgbarkeit von pharmazeutischen Produkten zu gewährleisten (Track & Trace). Dazu werden einzelne Pharmaverpackungen mit einer eindeutigen Kennung (z.B. einer Seriennummer) versehen (Serialisierung), um sie zu einem späteren Zeitpunkt eindeutig identifizieren zu können.

Die eindeutige Kennung wird üblicherweise als optoelektronisch lesbarer Code (Strichcode, 2D-Code) auf der Verpackung einer Ware aufgedruckt. An bestimmten Punkten in der Lieferkette, z.B. beim Verladen, bei der Ankunft in einem Lager, bei der Entgegennahme durch einen Kunden oder dergleichen, wird ein solcher Code ausgelesen und die eindeutige Kennung zusammen mit Informationen über den aktuellen Standort in einer Datenbank gespeichert.

Nachteilig an einem solchen Vorgehen ist, dass sich die Ware nicht lückenlos entlang der gesamten Lieferkette verfolgen lässt, sondern ihr Standort und ggf. ihr Zustand immer nur dann feststellbar ist, wenn die Ware definierte Standorte, an denen Lesegeräte verfügbar sind und ein Auslesen der Codes erfolgt, erreicht hat.

In Lieferketten kommt es immer wieder zum Verlust von Waren und Gütern. Ursachen können zum Beispiel Unfälle oder Unachtsamkeit bei Transport, Umgang oder Lagerung sein. Ebenso können Waren und Güter bewusst entwendet (Diebstahl) oder durch (zumindest nach außen) gleichwertig verpackte Waren und Güter ersetzt werden (Sabotage bzw. Fälschungen).

Im Stand der Technik sind Lösungen beschrieben, die sich der lückenlosen Warenverfolgung und Warensicherung widmen.

DE202007000597U1 offenbart eine Vorrichtung zur Überwachung eines Objekts mit einem Transponder. DE10029137A1 offenbart ein System zur Ortung von Gegenständen innerhalb eines zellularen Mobilfunknetzes. DE102010041548A1 offenbart ein Ortungssystem zur Bestimmung der Position von Gegenständen innerhalb eines Ortungsgebietes mittels eines Netzwerks aktiver Transponder.

Nachteilig an den im Stand der Technik beschriebenen Lösungen ist, dass jedes einzelne Objekt mit einem Langstreckensender ausgestattet werden muss, um es lückenlos verfolgen zu können. Dies bedeutet einen hohen technischen Aufwand verbunden mit entsprechend hohen Kosten. Wünschenswert wäre es zudem, nicht nur die Position einzelner Objekte sondern auch die Zustände, in denen sie sich befinden, erfassen zu können.

Ausgehend vom Stand der Technik stellt sich einem Fachmann die technische Aufgabe, Mittel bereitzustellen, die es erlauben, einzelne Objekte effizient und kostengünstig zu verfolgen, ein Verschwinden von Objekten zu registrieren und die Zustände, in denen sich die Objekte befinden, zu erfassen.

Diese Aufgabe wird durch die Gegenstände der unabhängigen Patentansprüche gelöst. Bevorzugte Ausführungsformen finden sich in der vorliegenden Beschreibung und den Figuren.

Ein erster Gegenstand der vorliegenden Erfindung ist ein System umfassend
- eine Mehrzahl von Funksensoren,
- eine Sende- und Empfangseinheit,
- einen Server,
- eine Analyseeinheit und
- Mittel zur Positionserfassung,
- wobei jeder Funksensor mit jeweils einem Objekt verbindbar ist,
- wobei jeder Funksensor konfiguriert ist, Messwerte zum Zustand des mit ihm verbundenen Objekts zu erfassen und Zustandsdaten zum Zustand des Objekts über eine Kurzstreckenverbindung an die Sende- und Empfangseinheit zu übermitteln,
- wobei die Sende- und Empfangseinheit konfiguriert ist,
   - die Zustandsdaten von den Funksensoren zu empfangen,
   - die Zustandsdaten an die Analyseeinheit zu übermitteln,
- wobei die Analyseeinheit konfiguriert ist,
   - die übermittelten Zustandsdaten von verschiedenen Funksensoren zu analysieren und miteinander zu vergleichen,
   - Abweichungen in den Zustandsdaten der verschiedenen Funksensoren zu identifizieren,
- wobei die Mittel zur Positionserfassung konfiguriert sind, die Position der Sende- und Empfangseinheit zu erfassen,
- wobei die Sende- und Empfangseinheit konfiguriert ist, Informationen zu den Abweichungen über eine Langstreckenverbindung an den Server zu übermitteln,
- wobei der Server konfiguriert ist, Informationen zu den Abweichungen und der Position gegenüber einem Nutzer anzuzeigen und/oder in einer Datenbank zu speichern,
   wobei es sich bei den Objekten um Waren handelt,
   dadurch gekennzeichnet, dass jeder Funksensor einen Verpackungszustandssensor umfasst, wobei der Verpackungszustandssensor erfasst, ob eine Verpackung, in der sich eine Ware befindet, geschlossen oder geöffnet ist.

Ein weiterer Gegenstand der vorliegenden Erfindung ist ein Verfahren umfassend die Schritte
- Verbinden einer Mehrzahl von Objekten mit jeweils einem Funksensor,
- Erfassen von Messwerten zu Zuständen der Objekte durch die mit den Objekten verbundenen Funksensoren,
- Übermitteln von Zustandsdaten zu den Zuständen der Objekte über eine Kurzstreckenverbindung an eine Sende- und Empfangseinheit,
- Analysieren der Zustandsdaten und Vergleichen der Zustandsdaten von verschiedenen Funksensoren miteinander,
- Identifizieren einer definierten Abweichung der Zustandsdaten eines Funksensors von anderen Funksensoren,
- Übermitteln von Informationen zu der identifizierten Abweichung über eine Langstreckenverbindung an einen Server,
- Ermitteln der Position der Sende- und Empfangseinheit,
- Übermitteln der Position der Sende- und Empfangseinheit an den Server,

Speichern der Position und der Informationen in einer Datenbank und/oder Anzeigen der Position und der Informationen gegenüber einem Nutzer,
wobei es sich bei den Objekten um Waren handelt,
dadurch gekennzeichnet, dass jeder Funksensor einen Verpackungszustandssensor umfasst, wobei der Verpackungszustandssensor erfasst, ob eine Verpackung, in der sich eine Ware befindet, geschlossen oder geöffnet ist.

Ein weiterer Gegenstand der vorliegenden Erfindung ist ein Computerprogrammprodukt umfassend einen Programmcode, der auf einem Datenträger gespeichert ist, und der einen Computer dazu veranlasst, die folgenden Schritte auszuführen, wenn der Programmcode in einen Arbeitsspeicher des Computers geladen ist:
- Empfangen von Daten während einer definierten Zeitspanne,
   - wobei die Daten von einer Mehrzahl an Funksensoren stammen,
   - wobei die Daten jedes Funksensors eine eindeutige Kennung und Zustandsdaten zu einem Zustand eines Objekts, mit dem der Funksensor verbunden ist, umfassen,
- Vergleichen der Zustandsdaten von verschiedenen Funksensoren miteinander,
- Identifizieren derjenigen Funksensoren, die während der definierten Zeitspanne die gleichen oder korrespondierende Zustände anzeigen,
- Verknüpfen derjenigen Objekte zu einem Kollektiv, mit denen die identifizierten Funksensoren verbunden sind,
   wobei es sich bei den Objekten um Waren handelt,
   dadurch gekennzeichnet, dass jeder Funksensor einen Verpackungszustandssensor umfasst, wobei der Verpackungszustandssensor erfasst, ob eine Verpackung, in der sich eine Ware befindet, geschlossen oder geöffnet ist.

Die Erfindung wird nachstehend näher erläutert, ohne zwischen den Erfindungsgegenständen zu unterscheiden. Die nachfolgenden Erläuterungen sollen vielmehr für alle Erfindungsgegenstände in analoger Weise gelten, unabhängig davon, in welchem Kontext sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die Erfindung dient der Überwachung einer Mehrzahl von Objekten.

Ein "Objekt" ist ein physischer (greifbarer, körperlicher) Gegenstand. Vorzugsweise handelt es sich bei den hier beschriebenen Objekten um Waren. Unter dem Begriff "Ware" werden bewegliche Sachen verstanden, die Gegenstand des Handelsverkehrs sind oder sein können. Besonders bevorzugte Objekte (Waren) sind pharmazeutische Produkte (Arzneimittel, Medikamente, Diagnostika und andere).

Ein Objekt im Sinne der Erfindung kann mehrere Bestandteile umfassen; beispielsweise kann ein Objekt ein Produkt in einer Verpackung sein.

Die Mehrzahl an Objekten bildet ein Kollektiv. Der Begriff "Mehrzahl" bedeutet eine Anzahl von mehr als zwei, vorzugsweise mehr als drei. Üblicherweise beträgt die Zahl der Objekte, die zu einem Kollektiv zusammengefasst werden, mindestens zehn und weniger als einhundert.

Der Begriff "Kollektiv" bedeutet, dass die zu einem Kollektiv gehörenden Objekte gemeinsam verfolgt werden. Üblicherweise werden die zu einem Kollektiv gehörenden Objekte gemeinsam transportiert und gelagert. Üblicherweise befinden sie sich auf einem gemeinsamen Träger, wie beispielsweise einer Palette (z.B. einer Europalette), in einer gemeinsamen Transportbox, in einem gemeinsamen Container, auf einem gemeinsamen Anhänger, in einem gemeinsamen Lagerraum und/oder dergleichen und bilden damit einen (lockeren) Verbund.

Jedes Objekt ist mit einem Funksensor ausgestattet. Ein "Sensor" ist ein technisches Bauteil, das bestimmte physikalische oder chemische Eigenschaften und/oder die stoffliche Beschaffenheit seiner Umgebung qualitativ oder als Messgröße quantitativ erfassen kann. Die Eigenschaften werden mittels physikalischer oder chemischer Effekte erfasst und in weiterverarbeitbare, meist elektrische Signale umgeformt. Bevor die elektrischen Signale über Funk an einen Empfänger übermittelt werden, werden sie üblicherweise noch digitalisiert. Ein "Funksensor" ist ein Sensor, der über eine Sendeeinheit verfügt, mit der Daten über Funk versendet werden können.

Die Sendeeinheit des Funksensors ist so ausgestaltet, dass sie Daten in Form von elektromagnetischen Wellen über eine kurze Reichweite versenden kann.

Der Begriff "kurze Reichweite" bedeutet, dass die (barrierefreie) Distanz zwischen einem Sender und einem Empfänger nicht größer als ein Grenzwert sein darf, um eine störungsfreie Übertragung von Daten von dem Sender zu dem Empfänger zu gewährleisten. Üblicherweise beträgt dieser Grenzwert 20 Meter, er kann jedoch auch größer (maximal 50 Meter) oder kleiner sein (mindestens 2 Meter).

In dieser Beschreibung wird auch der Begriff "Kurzstreckenverbindung" verwendet. Der Begriff "Kurzstreckenverbindung" bedeutet, dass ein Sender Daten versendet, die von einem Empfänger in einer Distanz zum Sender, die nicht größer als der zuvor genannte Grenzwert ist, empfangen werden. Ist die Distanz größer, kann ein störungsfreier Empfang nicht mehr gewährleistet werden.

Es ist denkbar, dass der Funksensor auch Daten und/oder Signale über eine Kurzstreckenverbindung empfangen kann.

Üblicherweise wird der Funksensor mit dem Objekt verbunden. Der Funksensor kann auf dem Objekt aufgeklebt, aufgedruckt, auflaminiert, eingeklemmt, eingehüllt, festgebunden oder auf andere Weise mit dem Objekt verbunden sein. Es ist denkbar, dass der Funksensor mit dem Objekt irreversibel verbunden ist; in einem solchen Fall würde ein Ablöseversuch dazu führen, dass der Funksensor beschädigt und damit unbrauchbar wird. Es ist auch denkbar, dass der Funksensor reversibel mit dem Objekt verbunden ist; in diesem Fall kann er von dem Objekt abgelöst und wiederverwendet werden.

Der Funksensor umfasst einen Datenspeicher. Vorzugsweise handelt es sich um einen Halbleiterspeicher. Üblicherweise handelt es sich bei dem Datenspeicher um einen WORM-Speicher (WORM: *write once, read many,* engl. für "schreibe einmal, lese vielfach"). In dem Datenspeicher ist eine eindeutige Kennung gespeichert.

Die eindeutige Kennung dient zur Identifizierung des Funksensors und/oder zur Identifizierung des Objekts, mit dem der Funksensor verbunden ist. Der Begriff "eindeutige Kennung" weist darauf hin, dass sich die eindeutige Kennung genau einem Funksensor zuordnen lässt; es gibt als keine zwei Funksensoren, die über dieselbe Kennung verfügen.

Die eindeutige Kennung kann eine Nummer oder ein alphanumerischer Code oder ein Binärcode oder ein Hexadezimalcode oder dergleichen sein.

Der Funksensor weist ferner eine Energieversorgungseinheit auf, die den Funksensor mit elektrischer Energie versorgt, damit er die hier beschriebenen Funktionen ausführen kann.

Bei der Energieversorgungseinheit kann es sich beispielsweise um eine elektrochemische Zelle (Batterie) oder einen Akkumulator handeln. In einer bevorzugten Ausführungsform handelt es sich bei der Energieversorgungseinheit um eine druckbare Batterie wie sie beispielhaft in US2010021799A, EP3104433A1, KR20170085256A, KR20170098004A, US2016351936A und US2010081049A beschrieben ist. Der Funksensor kann ferner so ausgestaltet sein, dass er Energie aus der Umgebung des Funksensors gewinnt. Die Energie aus der Umgebung kann beispielsweise in Form von Licht, elektrischen Feldern, magnetischen Feldern, elektromagnetischen Feldern, Bewegung, Druck und/oder Wärme und/oder anderen Energieformen bereitgestellt und durch den Funksensor genutzt werden. Diese Art der elektrischen Energieerzeugung ist als *Energy Harvesting* bekannt.

Der Funksensor weist einen Sensor oder mehrere Sensoren auf, mit dem/denen ein Zustand gemessen wird. Bei einem solchen Zustand kann es sich um eine oder mehrere Umweltbedingungen handeln, der/denen der Funksensor und/oder das Objekt unterliegt/unterlag ("Umweltzustand") und/oder es kann sich um einen oder mehrere Zustände des Funksensors und/oder des Objekts selbst ("Objektzustand") handeln.

Umweltzustände sind beispielsweise ein spezifischer Wert einer Temperatur, eines Luftdruck, einer Luftfeuchte, einer Intensität elektromagnetischer Strahlung in einem spezifischen Wellenlängenbereich, eine Beschleunigungskraft, denen der Sensor ausgesetzt ist, eine chemische Zusammensetzung der umgebenden Atmosphäre (bzw. das Vorhandensein eines oder mehrerer spezifischer Substanzen wie beispielsweise Trockeneis oder Stoffe zur Verlangsamung von Reifeprozessen) oder dergleichen. Umweltzustände werden zu dem Zeitpunkt und an dem Ort erfasst, an dem sie herrschen. Wird ein Umweltzustand zu einem Zeitpunkt von einem Funksensor erfasst, so unterliegt der Funksensor (bzw. das Objekt) diesem Umweltzustand zu diesem Zeitpunkt.

Objektzustände charakterisieren das Objekt selbst. Es handelt sich insbesondere um Umweltzustände, denen das Objekt zu einem früheren Zeitpunkt ausgesetzt war; Objektzustände können damit das Resultat vergangener Umweltbedingungen sein. Objektzustände sind beispielsweise: die Verpackung des Objekts ist geöffnet oder ungeöffnet, das Objekt ist gequetscht oder nicht gequetscht, das Objekt war einer Temperatur ausgesetzt, die oberhalb und/oder unterhalb eines definierten Temperaturgrenzwerts liegt, das Objekt war einer (Luft-)feuchte ausgesetzt, die oberhalb eines definierten Feuchtegrenzwerts liegt, das Objekt war einem Druck ausgesetzt, der unterhalb und/oder oberhalb eines definierten Druckgrenzwerts liegt, das Objekt war Beschleunigungskräften ausgesetzt, die oberhalb eines definierten Beschleunigungsgrenzwerts liegen und dergleichen. Üblicherweise wird zur Erfassung eines Objektzustands ein Sensor eingesetzt, bei dem eine Komponente durch einen Umweltzustand oberhalb und/oder unterhalb von definierten Grenzwerten (üblicherweise irreversibel) verändert wird. Eine solche Komponente wird in dieser Beschreibung auch als Indikator bezeichnet. Der Indikator zeigt also an, ob der Indikator (und damit auch das Objekt, mit dem der Indikator verbunden ist) einem spezifischen Umweltzustand ausgesetzt war.

In einer bevorzugten Ausführungsform umfasst der Funksensor einen oder mehrere Lagesensoren, mit denen die Lage des Objekts im Raum erfasst werden kann. Mit einem solchen Lagesensor kann beispielsweise erfasst werden, ob ein Objekt steht oder liegt (es wird die Richtung der Schwerkraft in Bezug auf eine oder mehrere geometrische Merkmale des Objekts bestimmt). Vorzugsweise kann mit dem einen oder den mehreren Lagesensoren eine Änderung der Lage des Objekts erfasst werden (Lageänderungssensor). Sowohl die Lage als auch Lageänderungen können beispielsweise mit Beschleunigungssensoren erfasst werden, die heutzutage beispielsweise in Tablet-Computern eingesetzt werden, um zu erkennen, ob der Computer hochkant oder quer gehalten wird, oder die in Schrittzählern eingesetzt werden, um die Schritte einer Person zu zählen, die einen solchen Schrittzähler mit sich führt. Üblicherweise werden drei senkrecht zueinander angeordnete Beschleunigungssensoren eingesetzt, um Beschleunigungen in den drei Raumrichtungen zu erfassen.

Weitere bevorzugte Zustände, die mittels des Funksensors erfasst werden, sind: Temperatur, Druck und/oder Luftfeuchtigkeit.

In einer bevorzugten Ausführungsform umfasst der Funksensor einen Verpackungszustandssensor. Der Verpackungszustandssensor erfasst, ob eine Verpackung, in der sich eine Ware befindet, geschlossen oder geöffnet ist.

Der Verpackungszustandssensor erfasst den Verpackungszustand (ungeöffnet / geöffnet) vorzugsweise anhand einer physikalischen Eigenschaft, die sich ändert, wenn die Verpackung geöffnet worden ist und/oder geöffnet wird. Die physikalische Eigenschaft, die sich durch Öffnen der Verpackung ändert, kann zum Beispiel eine elektrische Leitfähigkeit (bzw. ein elektrischer Widerstand) und/oder eine elektrische Kapazität und/oder eine Induktivität oder dergleichen sein.

In einer Ausführungsform der vorliegenden Erfindung verfügt der Funksensor über einen oder mehrere elektrisch leitfähige Drähte, die so angebracht sind, dass beim Öffnen der Verpackung (in der sich das Objekt befindet oder die Bestandteil des Objekts ist) mindestens ein Draht irreversibel unterbrochen wird, so dass durch diesen Draht kein elektrischer Strom mehr fließen kann. Der Funksensor erkennt einen unterbrochenen Draht daran, dass sich die Leitfähigkeit geändert hat. Dieses Prinzip ist beispielsweise beschrieben in WO9604881A1 oder DE19516076A1. Der Draht fungiert im vorliegenden Fall als Indikator; das Öffnen der Verpackung führt zu einer irreversiblen Veränderung des Indikators: der Draht wird unterbrochen.

Zustände können mit dem Funksensor zu definierten Zeitpunkten erfasst werden. "Definierter Zeitpunkt" bedeutet, dass der Zeitpunkt, zu dem eine Messwerterfassung erfolgt, klaren Regeln folgt. Es ist beispielsweise denkbar, dass eine Messwerterfassung zu vorher festgelegten Zeitpunkten erfolgt, wie z.B. einmal am Tag um 12 Uhr mittags, oder jede volle Stunde oder alle 10 Minuten oder dergleichen. Unter einem "definierten Zeitpunkt" soll aber auch das Eintreten eines definierten Ereignisses verstanden werden, dass eine Messwerterfassung auslöst, wie zum Beispiel ein äußerer (elektromagnetischer) Impuls, eine Erschütterung, das Eintreffen eines Signals und dergleichen.

Es ist denkbar, dass die Messwerterfassung zum Erfassen eines Zustands und das Versenden von Daten zu dem erfassten Zustand miteinander gekoppelt sind, zum Beispiel in der Weise, dass immer dann, wenn eine Messwerterfassung erfolgt ist, Daten zu den gemessenen Werten versendet werden. Denkbar ist aber auch eine Entkoppelung; für diesen Fall weist der Funksensor einen (vorzugsweise wiederbeschreibbaren) Datenspeicher auf, in dem Messwerte (zumindest temporär) gespeichert werden können. Messwerte können zu definierten Zeitpunkten erfasst und in dem Datenspeicher gespeichert werden; die gespeicherten Daten können dann zu anderen definierten Zeitpunkten, die unabhängig von den Zeitpunkten der Messwerterfassung sind, versendet werden.

Es ist denkbar, dass der Funksensor über einen Zeitmesser verfügt. Es ist auch denkbar, dass der Funksensor über ein Signal von außen (zum Beispiel von der Sende- und Empfangseinheit) zur Messwerterfassung und/oder zur Datenübertragung zu definierten Zeitpunkten oder unregelmäßig veranlasst wird.

Einem Kollektiv von Objekten ist üblicherweise für eine definierte Zeitspanne eine (einzige) Sende- und Empfangseinheit zugeordnet. Die definierte Zeitspanne erstreckt sich üblicherweise über die Lieferkette der Objekte, d.h. so lange, wie sich ein Objekt auf einem Transportweg und/oder in einem Lager befindet, bevor das Objekt seinem bestimmungsgemäßen Gebrauch zugeführt wird, ist es üblicherweise einer (einzigen) Sende- und Empfangseinheit zugeordnet. Die Zuordnung ist jedoch nicht fest sondern kann aufgehoben werden.

Die Sende- und Empfangseinheit verfügt über zwei unterschiedliche drahtlose Funksysteme; einem Funksystem mit einer kurzen Reichweite und einem Funksystem mit einer langen Reichweite.

Mit dem kurzreichweitigen Funksystem empfängt die Sende- und Empfangseinheit Daten, die von den Funksensoren über eine Kurzstreckenverbindung versendet werden. Es ist auch denkbar, dass die Sende- und Empfangseinheit Daten und/oder Signale über das kurzreichweitige Funksystem an Funksensoren übermittelt.

Die Übermittlung von Daten zwischen den Funksensoren und der Sende- und Empfangseinheit erfolgt über Funk, d.h. drahtlos mit Hilfe modulierter elektromagnetischer Wellen im Radiofrequenzbereich. Die Funkverbindung zwischen einem Funksensor und der Sende- und Empfangseinheit kann beispielsweise über einen bekannten Standard wie WLAN, Bluetooth, ZigBee, EnOcean, Z-Wave, RFID (ISO18000) oder dergleichen erfolgen. Auch der Einsatz eines proprietären Protokolls ist denkbar.

Es ist denkbar, dass die Funksensoren unabhängig voneinander und unabhängig von der Sende- und Empfangseinheit Daten versenden. Die Sende- und Empfangseinheit kann so konfiguriert sein, dass sie einen definierten Frequenzbereich "abhört" und die von Funksensoren in diesem Frequenzbereich versandten Daten empfängt.

Denkbar ist, dass zur Datenübertragung keine vollständige Funkverbindung zum Beispiel nach dem WLAN- oder Bluetooth-Standard aufgebaut wird, sondern dass der Funksensor die zu übermittelnden Daten in einem Advertizing-Datenpaket, auch "Beacon" genannt, verpackt.

Geräte nach den Standards der Bluetooth SIG senden als Short Range Devices (SRD) in einem lizenzfreien ISM-Band (Industrial, Scientific and Medical Band) zwischen 2,402 GHz und 2,480 GHz. Eine Unterform von Bluetooth ist Bluetooth Low Energy, kurz Bluetooth LE oder BLE, wobei ein geringerer Energieverbrauch als beim klassischen Bluetooth benötigt wird. Bluetooth LE teilt insbesondere das ISM-Frequenzband in 40 Kanäle mit einer Breite von 2 MHz. Herkömmlicherweise senden Bluetooth-LE-Transponder unabhängig voneinander kurze Advertizing-Datenpakete auf einem von drei Advertizing-Kanälen aus. Die Advertizing-Kanäle liegen im ISM-Frequenzband, typischerweise zwei an den Rändern des Bandes und einer in der Mitte des Bandes. Insbesondere können die Kanäle 37, 38 und 39 als die Advertizing-Kanäle verwendet werden, auf denen die Advertizing-Signale/Datenpakete gesendet werden. Normalerweise lauscht ein Bluetooth-LE-Transponder anschließend auf diesem Kanal nach einer Verbindungsanfrage, worauf dann auf einen der verbleibenden 37 Kanäle gewechselt wird, um einen Datenaustausch durchzuführen. Es handelt sich bei den Advertizing-Kanälen also um Broadcast (Rundruf) Kanäle, mit denen Datenpakete von einer Quelle aus an alle erreichbaren bzw. "zuhörenden" Teilnehmer des Bluetooth-Nachrichtennetzes übertragen werden können. Advertizing-Datenpakete können in regelmäßigen Abständen, d.h. periodisch, auf jedem Advertizing-Kanal gesendet werden. Ein Zeitintervall zwischen aufeinanderfolgenden Advertizing-Datenpaketen kann sowohl ein festes Intervall und eine zusätzliche zufällige Verzögerung umfassen. Ein Standard-Advertizing-Datenpaket umfasst eine Nutzlast von maximal 31 Byte für Daten, die üblicherweise den Sender und seine Fähigkeiten beschreiben. Es können damit aber auch beliebige benutzerdefinierte Informationen auf andere Geräte übertragen werden. Wenn die standardmäßige 31-Byte-Nutzlast nicht groß genug für die Daten ist, unterstützt BLE auch eine optionale sekundäre Advertizing-Nutzlast. Der erfindungsgemäße Funksensor kann so konfiguriert sein, dass er über Funk ein Advertizing-Datenpaket versendet, das die zu übermittelnden Daten (Zustandsdaten, eindeutige Kennung) umfasst. Die erfindungsgemäße Sende- und Empfangseinheit kann so konfiguriert sein, dass sie das Advertizing-Datenpaket empfängt und die mindestens eine Zustandsinformation und die eindeutige Kennung aus dem Advertizing-Datenpaket extrahiert.

Alternativ zum Bluetooth-Standard kann der Versand eines Advertizing-Datenpakets auch über eine Kommunikation nach dem Wi-Fi Standard (IEEE 802.11) erfolgen. IEEE 802.11 ist eine Normenfamilie für Wireless Local Area Networks (WLAN). Service Set bezeichnet nach der Norm 802.11 des *Institute of Electrical and Electronics Engineers* alle Geräte in einem WLAN. Ein Service Set Identifier (SSID) ist ein frei wählbarer Name eines Service Sets, durch den es ansprechbar wird. Da diese Kennung oftmals manuell von einem Benutzer in Geräte eingegeben werden muss, ist sie oft eine Zeichenkette, die für Menschen leicht lesbar ist, und sie wird daher allgemein als Netzwerkname des WLANs bezeichnet. Ein SSID kann bis zu 32 Byte lang sein. Der erfindungsgemäße Funksensor kann so konfiguriert sein, dass er über Funk ein SSID-Datenpaket versendet, das die zu übermittelnden Daten (Zustandsdaten, eindeutige Kennung) umfasst. Die erfindungsgemäße Sende- und Empfangseinheit kann so konfiguriert sein, dass sie das SSID-Datenpaket empfängt und die mindestens eine Zustandsinformation und die eindeutige Kennung aus dem SSID-Datenpaket extrahiert.

Denkbar ist aber auch, dass die Sende- und Empfangseinheit einzelne Funksensoren zur Übermittlung von Daten aufruft. In einem solchen Fall kann eine Sende- und Empfangseinheit zunächst durch ein Signal die in Reichweite der Sende- und Empfangseinheit befindlichen Funksensoren dazu auffordern, ihre Anwesenheit durch ein Signal, das üblicherweise die eindeutige Kennung umfasst, zu bestätigen. Im Anschluss verbindet sich die Sende- und Empfangseinheit nacheinander mit den anwesenden Funksensoren, um Zustandsdaten zu empfangen.

Mit dem langreichweitigen Funksystem übermittelt die Sende- und Empfangseinheit Daten (ggf. über eine oder mehrere Zwischenstationen) an ein separates, meistens stationäres Computersystem (Server) über eine größere Distanz. Diese Distanz beträgt üblicherweise mindestens einen Kilometer.

Die Übermittlung von Daten von der Sende- und Empfangseinheit an das separate, meistens stationäre Computersystem (Server) erfolgt (zumindest teilweise) ebenfalls über Funk, vorzugsweise über ein Mobilfunknetz beispielsweise über ein Mobilfunknetz, das auf dem GSM-, GPRS-, 3G-, LTE-, 4G-, 5G-Standard oder einem anderen Standard basiert. Vorzugsweise gelangen Daten von der Sende- und Empfangseinheit über ein Mobilfunknetz ins Internet und dann zum Server.

Das erfindungsgemäße System umfasst ferner Mittel zur Erfassung der Position der Sende- und Empfangseinheit. Die Sende- und Empfangseinheit kann beispielsweise über einen Sensor ("GPS-Sensor") verfügen, der ein Signal von einem Satellitennavigationssystem empfängt und hierüber seine Position bestimmt. Bekannte Satellitennavigationssysteme sind beispielsweise NAVSTAR GPS, GLONASS, Galileo oder Beidou. Da sich die Abkürzung GPS (Globales Positionsbestimmungssystem) in der Umgangssprache als generische Bezeichnung für alle Satellitennavigationssysteme etabliert hat, wird in dieser Beschreibung der Begriff GPS als Sammelbezeichnung für alle Positionsbestimmungssysteme verwendet.

Die Position der Sende- und Empfangseinheit kann ferner aus der (Mobil-)Funkzelle, in der sich die Sende- und Empfangseinheit befindet, abgeleitet werden. Im Mobilfunk beruht die einfachste Art der Standortbestimmung darauf, dass die Zelle, in der sich eine Sendeeinheit befindet, bekannt ist. Da beispielsweise ein eingeschaltetes Mobilfunktelefon mit einer Basisstation in Verbindung steht, lässt sich die Position des Mobilfunktelefons zumindest einer Mobilfunkzelle (Cell-ID) zuweisen. Analog kann die Position der Sende- und Empfangseinheit mit der Mobilfunkzelle gleichgesetzt werden, mit der die Sende- und Empfangseinheit verbunden ist. Mit Hilfe von GSM (Global System for Mobile Communications) kann der Standort einer Sendeeinheit auf mehrere hundert Meter genau bestimmt werden. In Städten kann der Standort auf 100 bis 500 m genau bestimmt werden; in ländlichen Gegenden erhöht sich der Radius auf 10 km oder mehr. Wird die Information über die Cell-ID mit dem TA-Parameter (TA: Timing Advance) kombiniert, dann kann die Genauigkeit erhöht werden. Je höher dieser Wert ist, desto weiter weg ist die Sendeeinheit von der Basisstation. Mit dem EOTD-Verfahren (EOTD: Enhanced Observed Time Difference) lässt sich eine Sendeeinheit noch genauer orten. Dabei werden die Laufzeitunterschiede der Signale zwischen der Sendeinheit und mehreren Empfangseinheiten bestimmt.

Weitere Möglichkeiten der Positionsbestimmung sind im Stand der Technik beschrieben (siehe z.B. DE10029137A1, DE102010041548A1, DE102012214203, DE102015121384A1A1, DE102016225886, US2015119086A1A1).

Das erfindungsgemäße System kann so konfiguriert sein, dass die Position der Sende- und Empfangseinheit zu definierten Zeitpunkten oder in unregelmäßigen Zeitabständen erfasst und dem Server übermittelt wird. Der Server kann die Position der Sende- und Empfangseinheit (aktiv) abfragen oder (passiv) empfangen.

Die Positionen der Objekte, die zu einem Kollektiv gehören, werden mit der Position der Sende- und Empfangseinheit, der das Kollektiv zugeordnet ist, gleichgesetzt. Es ist also nicht notwendig, dass die Position der Objekte individuell erfasst und an den Server übermittelt wird. Stattdessen wird nur eine Position (die Position der Sende- und Empfangseinheit) erfasst und für alle Objekte des Kollektivs verwendet. Da sich die Objekte eines vollständigen Kollektivs in einer maximalen Entfernung, die der Reichwerte der kurzreichweitigen Funkverbindung entspricht, von der Sende- und Empfangseinheit befinden, ist der Positionsfehler, der durch diese Vorgehensweise für die einzelnen Objekte entsteht, vernachlässigbar. Es ist sogar denkbar, dass dieser Positionsfehler kleiner als die Genauigkeit der Methode zur Positionserfassung der Sende- und Empfangseinheit und damit irrelevant ist. Die Position aller Objekte entspricht (innerhalb der beschriebenen Fehlergrenzen) jedoch nur dann der Position der Sende- und Empfangseinheit, wenn das Kollektiv vollständig ist. Wurde ein Objekt entwendet, entspricht die Position dieses Objekts (innerhalb der beschriebenen Fehlergrenzen) nicht der Position der Sende- und Empfangseinheit. Die Vollständigkeit des Kollektivs wird mittels der Funksensoren ermittelt. Die Funksensoren brauchen damit weder über Mittel zur Positionserfassung noch über Mittel zur Langstreckendatenübertragung - jeweils im o.g. Sinne - verfügen.

Zur Ermittlung der Vollständigkeit und/oder Unversehrtheit des Kollektivs werden die von den Funksensoren stammenden Zustandsdaten analysiert. Die Analyse erfolgt durch eine Analyseeinheit. Die Analyseeinheit kann Bestandteil der Sende- und Empfangseinheit sein, sie kann aber auch Bestandteil des Servers sein. Es ist auch denkbar, dass einige Funktionen der Analyseeinheit von der Sende- und Empfangseinheit und einige Funktionen der Analyseeinheit von dem Server ausgeführt werden.

Die Analyseeinheit analysiert die Zustandsdaten und prüft, ob definierte Grenzwerte eingehalten werden/worden sind, wie beispielsweise eine Maximaltemperatur, eine Minimaltemperatur, ein Maximaldruck, ein Minimaldruck, eine Maximalbeschleunigung, eine Maximalkonzentration, eine Minimalkonzentration und/oder dergleichen.

Insbesondere vergleicht die Analyseeinheit die Zustandsdaten von verschiedenen Funksensoren miteinander, um Abweichungen zu identifizieren. Abweichungen können Auskunft darüber geben, ob das Kollektiv vollständig ist und/oder ob das Kollektiv unversehrt ist.

Die Analyseeinheit kann prüfen, ob von allen Funksensoren Zustandsdaten an die Sende- und Empfangseinheit übermittelt worden sind. Kann die Sende- und Empfangseinheit von einem Funksensor keine Zustandsdaten empfangen, so kann dies daran liegen, dass sich die Sende- und Empfangseinheit außerhalb der Reichweite des Funksensors befindet, es ist denkbar, dass das Objekt, mit dem der Funksensor verbunden ist, entfernt worden ist. Das Kollektiv ist nicht mehr vollständig. Das Objekt, von dem keine Zustandsdaten empfangen worden sind, gehört nicht mehr zum Kollektiv; seine Position entspricht nicht mehr der Position der zum Kollektiv gehörigen Sende- und Empfangseinheit.

Die Analyseeinheit kann prüfen, ob die von den Funksensoren übermittelten Zustandsdaten die gleichen oder korrespondierende Zustände anzeigen oder ob es eine oder mehrere Abweichungen bei einem oder mehreren Funksensoren gibt. Liegen eine oder mehrere Abweichung vor, unterliegen die Objekte nicht mehr den gleichen Zuständen; das Kollektiv ist nicht mehr unversehrt. Zum Beispiel ist es denkbar, dass ein Objekt von einer Palette, auf der das Kollektiv der Objekte gelagert ist, heruntergefallen ist. Das Herunterfallen bedeutet eine Lageänderung, die z.B. von Beschleunigungssensoren erfasst wird. Die übrigen Objekte haben die entsprechende Lagenänderung nicht vollzogen. Die Zustandsdaten der Objekte zeigen also Abweichungen voneinander: ein einziges Objekt hat Bewegungen vollzogen (Herunterfallen), die von den Bewegungen abweichen, die die übrigen Mitglieder des Kollektivs vollzogen haben. Dabei müssen die Zustandsdaten nicht in jedem Fall absolut gleiche Zustände anzeigen. Wird ein einzelnes Objekt in einer rechteckigen Verpackung um 90° oder um 180° entlang einer Raumachse gedreht, beispielsweise um es in einem Stapel stabiler zu positionieren, kann eine solche Lageänderung irrelevant in Bezug auf die Prüfung auf Unversehrtheit des Kollektivs sein. Nichtgleiche Zustände, die nicht mit der Unversehrtheit des Kollektivs im Zusammenhang stehen, werden hier als korrespondierende Zustände bezeichnet.

Es ist auch denkbar, dass die Sende- und Empfangseinheit ebenfalls über einen oder mehrere Sensoren verfügt, mit dem/denen sie Messwerte zu Zuständen der Umgebung und/oder der Sende- und Empfangseinheit erfasst. Diese Zustandsdaten können ebenfalls an die Analyseeinheit übermittelt werden. Die Zustandsdaten der Sende- und Empfangseinheit können mit Zustandsdaten, der Funksensoren verglichen und es können Abweichungen identifiziert werden. Die Zustandsdaten der Sende- und Empfangseinheit können analysiert und die Ergebnisse der Analyse vom Server weiterverarbeitet werden (Anzeigen gegenüber einem Nutzer, Speichern, Erzeugen von Warnmeldungen bei Unter- und/oder Überschreiten definierter Grenzwerte und/oder dergleichen).

Die Position der Sende- und Empfangseinheit (zu verschiedenen Zeitpunkten) und Informationen zur Vollständigkeit und Unversehrtheit des Kollektivs werden von dem Server gegenüber einem Nutzer zum Beispiel auf einem Bildschirm angezeigt und/oder in einer Datenbank gespeichert.

Die Zusammenfassung der Objekte zu einem Kollektiv (Bildung des Kollektivs) kann manuell oder automatisiert erfolgen.

Bei dieser Zusammenfassung werden die Funksensoren der Objekte, die zum Kollektiv gehören, mit der Sende- und Empfangseinheit verknüpft. Der Begriff Verknüpfung bedeutet hier eine logische Verknüpfung. Das Ergebnis der Verknüpfung ist, dass in einem Datenspeicher der Sende- und Empfangseinheit und/oder des Severs die eindeutigen Kennungen derjenigen Funksensoren zusammen (z.B. in einer Tabelle oder einer anderen Liste) gespeichert sind, die Bestandteile des Kollektivs sind.

Der Prozess der Verknüpfung von Funksensoren mit einer Sende- und Empfangseinheit kann manuell durch einen Nutzer erfolgen, beispielsweise dadurch, dass der Nutzer eine Liste von eindeutigen Kennungen von Funksensoren in einem Datenspeicher der Sende- und Empfangseinheit speichert. Die Sende- und Empfangseinheit kommuniziert anschließend nur mit den Funksensoren, deren eindeutige Kennungen in dem Datenspeicher gespeichert sind, bzw. verarbeitet nur die Daten, die von diesen Funksensoren stammen.

Vorzugsweise erfolgt die Verknüpfung von Funksensoren mit einer Sende- und Empfangseinheit automatisiert: Während einer definierten Zeitspanne empfängt die Sende- und Empfangseinheit Zustandsdaten und eindeutige Kennungen von solchen Funksensoren, in deren Reichweite sich die Sende- und Empfangseinheit befindet. Die Sende- und Empfangseinheit speichert die eindeutigen Kennungen zusammen mit den dazugehörigen Zustandsdaten in einem Datenspeicher ab. Anschließend werden die Zustandsdaten der Funksensoren miteinander verglichen. Es werden diejenigen Funksensoren identifiziert, die während der definierten Zeitspanne die gleichen bzw. korrespondierende Zustände anzeigen. Diejenigen Funksensoren, die während der definierten Zeitspanne die gleichen oder korrespondierende Zustände anzeigen, werden mit der Sende- und Empfangseinheit verknüpft - sie bilden das Kollektiv; diejenigen Funksensoren, die während der definierten Zeitspanne abweichende Zustände anzeigen, werden nicht mit der Sende- und Empfangseinheit verknüpft. Diejenigen Funksensoren, für die nicht während der kompletten definierten Zeitspanne Zustandsdaten empfangen wurden, werden vorzugsweise ebenfalls nicht mit der Sende- und Empfangseinheit verknüpft, da sie offenbar während des Prozesses der Kollektivbildung außerhalb der Reichweite der kurzreichweitigen Funkverbindung zwischen Funksensor und Sende- und Empfangseinheit gelangt sind.

In einer bevorzugten Ausführungsform der vorliegenden Erfindung handelt es sich bei dem Zustand, der bei der oben beschriebenen Verknüpfung geprüft wird, um die Lage und/oder Lageänderungen der Objekte. Nur diejenigen Objekte, die innerhalb der Zeitspanne die gleiche Lage innehatten oder die gleichen Lageänderungen (z.B. verursacht durch ein Umladen) vollzogen haben, werden dem Kollektiv zugeordnet.

Nach der Verknüpfung bilden die Objekte ein Kollektiv, dessen Vollständigkeit und/oder Unversehrtheit mit Hilfe der Funksensoren und der Sende- und Empfangseinheit überprüft und zeitlich und räumlich verfolgt werden kann.

Die Erfindung wird nachfolgend anhand von Figuren näher erläutert, ohne die Erfindung auf die in den Figuren gezeigten Merkmale und Merkmalskombinationen beschränken zu wollen.

Es zeigen:

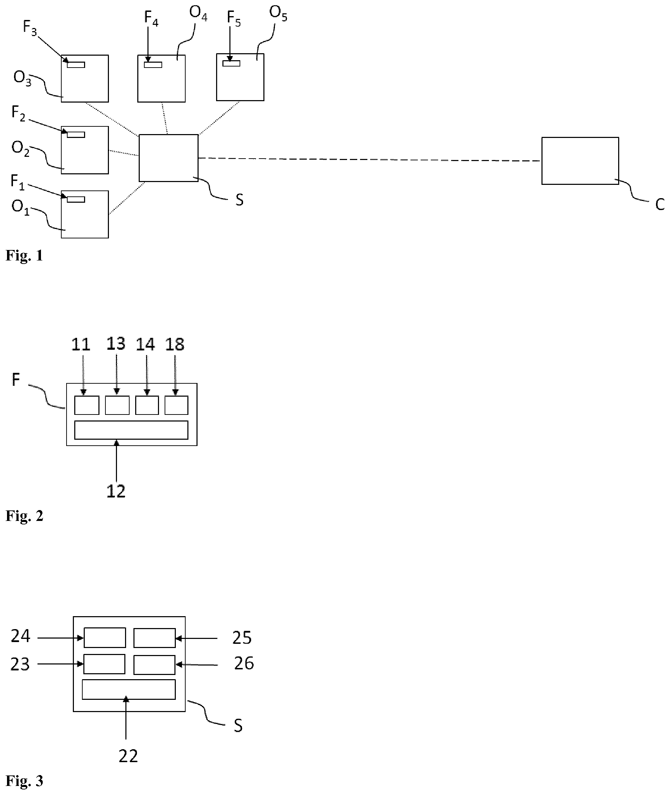

Fig. 1 zeigt schematisch eine Ausführungsform des erfindungsgemäßen Systems. Das erfindungsgemäße System umfasst eine Mehrzahl an Funksensoren (F₁, F₂, F₃, F₄, F₅) und eine Sende- und Empfangseinheit S. Die Funksensoren sind mit einer Mehrzahl an Objekten (O₁, O₂, O₃, O₄, O₅) verbunden; jedes Objekt trägt einen Funksensor. Die Funksensoren können Daten an die Sende- und Empfangseinheit über eine Kurzstreckenverbindung (dargestellt durch die gepunkteten Linien) übermitteln. Die Sende- und Empfangseinheit (S) kann Daten über eine Langstreckenverbindung an einen Server (C) übermitteln (dargestellt durch die gestrichelte Linie).
Fig. 2 zeigt schematisch eine Ausführungsform eines erfindungsgemäßen Funksensors (F). Der Funksensor (F) umfasst mindestens einen Sensor (11) zur Erfassung von Messwerten zu einem Zustand des Objekts, mit dem er verbunden ist. Der Funksensor umfasst eine Steuereinheit (12) zur Steuerung der Komponenten des Funksensors, insbesondere zur Steuerung der Messwerterfassung und des Versendens von Daten an eine Sende- und Empfangseinheit. Der Funksensor (F) umfasst eine Energieversorgungseinheit (13), eine Sendeeinheit (14) zum Versenden von Daten über eine Kurzstreckenverbindung an die Sende- und Empfangseinheit und einen Datenspeicher (18), in dem eine eindeutige Kennung gespeichert ist. Die Sendeeinheit (14) kann auch eine Einheit zum Versendung und Empfangen von Daten über eine Kurzstreckenverbindung sein.
Fig. 3 zeigt schematisch eine Ausführungsform einer erfindungsgemäßen Sende- und Empfangseinheit (S). Die Sende- und Empfangseinheit umfasst eine Empfangseinheit (24) zum Empfang von Daten, die von einer Mehrzahl an Funksensoren über eine Kurzstreckenverbindung versandt werden. Die Sende- und Empfangseinheit umfasst ferner eine Energieversorgungseinheit (23), einen GPS-Sensor (25) zur Positionsermittlung und eine Sendeeinheit (26) zum Versenden von Daten an einen Server über eine Langstreckenverbindung. Die Sende- und Empfangseinheit umfasst ferner eine Steuereinheit (22) zur Steuerung der Komponenten der Sende- und Empfangseinheit, insbesondere zur Steuerung des Empfangs von Daten über die Kurzstreckenverbindung, zur Steuerung der Positionsermittlung und zur Steuerung des Versendens von Daten über die Langstreckenverbindung.
Die in den Figuren 1 und 3 gezeigte Ausführungsform einer Sende- und Empfangseinheit kann so konfiguriert sein, dass sie Daten von Funksensoren, in deren Reichweite sie sich befindet, über eine Kurzstreckenverbindung empfängt. Die Daten der Funksensoren umfassen zum einen Daten zum Zustand des jeweiligen Objekts, mit dem die Funksensoren verbunden sind, und zum anderen jeweils eine eindeutige Kennung. Die Sende- und Empfangseinheit kann ihre Position mittels des GPS-Sensors feststellen und die Daten der Funksensoren zusammen mit Positionsdaten an den Server versenden. Der Server wertet die Daten aus. Er prüft, ob von allen Objekten, die zu einem Kollektiv gehören, Zustandsdaten übermittelt worden sind. Fehlt ein Objekt, wird ein Warnhinweis erzeugt, der einem Nutzer übermittelt wird. Ferner wird geprüft, ob die Zustände der Objekte, zu denen Zustandsdaten übermittelt worden sind, übereinstimmen (oder korrespondieren) oder ob Abweichungen (z.B. bei Lageänderungen, Temperatur, Feuchte, Verpackungszustand oder dergleichen) vorliegen. Bei Abweichungen wird ein Warnhinweis erzeugt, der einem Nutzer übermittelt wird. Ferner werden die Positionsinformationen für alle Objekte, zu denen Daten empfangen worden sind, aktualisiert: in einer Datenbank, in der Informationen zur Position der Objekte gespeichert sind, wird als neue Position der Objekte die von der Sende- und Empfangseinheit übermittelte Position eingetragen.

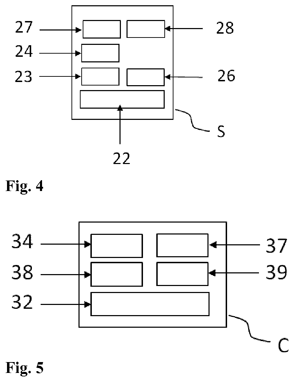

Fig. 4 zeigt schematisch eine weitere Ausführungsform einer erfindungsgemäßen Sende- und Empfangseinheit (S). Zusätzlich zu den im Zusammenhang mit Figur 3 beschriebenen Komponenten verfügt die Sende- und Empfangseinheit über eine Analyseeinheit (27) und einen Datenspeicher (28). Ein GPS-Sensor ist nicht vorhanden. In dem Datenspeicher können eindeutige Kennungen aller Funksensoren gespeichert sein, deren Objekte zu einem Kollektiv zusammengefasst sind. Die Analyseeinheit ist konfiguriert, die von der Sende- und Empfangseinheit empfangenen Daten der Funksensoren zu analysieren: die Analyseeinheit prüft anhand der in dem Datenspeicher gespeicherten Liste an eindeutigen Kennungen, ob zu allen Objekten Daten empfangen worden sind; sie vergleicht die Zustände der Objekte; sie übermittelt die Ergebnisse der Prüfung an die Steuereinheit. Falls zu einem Objekt keine Daten empfangen worden sind, erzeugt die Steuereinheit eine Warnmeldung und die Steuereinheit veranlasst die Sendeeinheit zur Übermittlung der Warnmeldung an den Server. Falls Abweichungen bei den Zuständen der Objekte vorliegen, erzeugt die Steuereinheit eine Warnmeldung und die Steuereinheit veranlasst die Sendeeinheit zur Übermittlung der Warnmeldung an den Server. Für alle Objekte, zu denen Daten empfangen worden sind und die die gleichen oder korrespondierende Zustände zeigen, wird eine Mitteilung erzeugt, dass sie vorhanden und unversehrt sind. Der Mitteilung wird eine Information über die Position, in der sich die Sende- und Empfangseinheit gerade befindet, zugefügt. Die Position wird aus der Mobilfunkzelle, in der sich die Sende- und Empfangseinheit gerade befindet, abgeleitet.
Fig. 5 zeigt schematisch eine Ausführungsform des Servers (C). Der Server (C) umfasst eine Empfangseinheit (34), mit der der Server (C) Daten über eine Langstreckenverbindung von einer Sende- und Empfangseinheit empfangen kann. Die Daten umfassen üblicherweise Zustandsdaten zu den Zuständen von Objekten, die einem Kollektiv angehören, den Objekten zugeordnete eindeutige Kennungen und Daten zur Position der Sende- und Empfangseinheit. Der Server (C) umfasst ferner einen Datenspeicher (38), in dem die eindeutigen Kennungen und Positionen zu den Objekten gespeichert sind. Der Server (C) umfasst ferner eine Analyseeinheit (37), eine Ausgabeeinheit (39) und eine Steuereinheit (32). Die Steuereinheit (32) dient insbesondere zur Steuerung der Komponenten des Servers wie beispielsweise der Datenerfassung, -analyse und -ausgabe. Die von der Empfangseinheit (34) empfangenen Daten werden der Analyseeinheit (37) zugeführt. Die Analyseeinheit prüft anhand der in dem Datenspeicher (38) gespeicherten Kennungen, ob zu allen Objekten Daten empfangen worden sind. Sie vergleicht die Zustände der Objekte und identifiziert Abweichungen. Falls zu einem Objekt keine Daten empfangen worden sind, erzeugt die Steuereinheit (32) eine Warnmeldung und die Steuereinheit (32) veranlasst die Ausgabeeinheit (39) zur Anzeige der Warnmeldung gegenüber einem Nutzer. Falls Abweichungen bei den Zuständen der Objekte vorliegen, erzeugt die Steuereinheit (32) eine Warnmeldung und die Steuereinheit (32) veranlasst die Ausgabeeinheit (39) zur Anzeige der Warnmeldung gegenüber einem Nutzer. Für alle Objekte, für die Zustandsdaten empfangen wurden, aktualisiert (ergänzt) die Steuereinheit (32) die in dem Datenspeicher (38) gespeicherten Positionen der Objekte. Als neue (aktualisierte) Positionen der Objekte wird die Position der Sende- und Empfangseinheit verwendet.

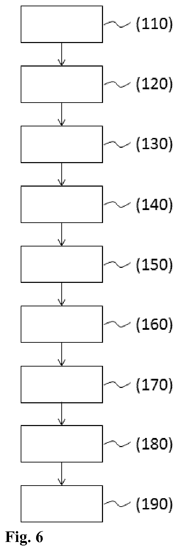

Fig. 6 zeigt eine Ausführungsform des erfindungsgemäßen Verfahrens in Form eines Ablaufdiagramms. Das Verfahren umfasst die Schritte:

| | |
|---|---|
| (110) | Verbinden einer Mehrzahl von Objekten mit jeweils einem Funksensor, |
| (120) | Erfassen von Messwerten zu Zuständen der Objekte durch die mit den Objekten verbundenen Funksensoren, |
| (130) | Übermitteln von Zustandsdaten zu den Zuständen der Objekte über eine Kurzstreckenverbindung an eine Sende- und Empfangseinheit, |
| (140) | Vergleichen der Zustandsdaten miteinander, |
| (150) | Identifizieren einer definierten Abweichung der Zustandsdaten eines Funksensors von anderen Funksensoren, |
| (160) | Übermitteln von Informationen zu der identifizierten Abweichung und/oder den Zustandsdaten über eine Langstreckenverbindung an einen Server, |
| (170) | Ermitteln der Position der Sende- und Empfangseinheit, |
| (180) | Übermitteln der Position der Sende- und Empfangseinheit an den Server, |
| (190) | Speichern der Position und der Informationen in einer Datenbank und/oder Anzeigen der Position und der Informationen gegenüber einem Nutzer. |

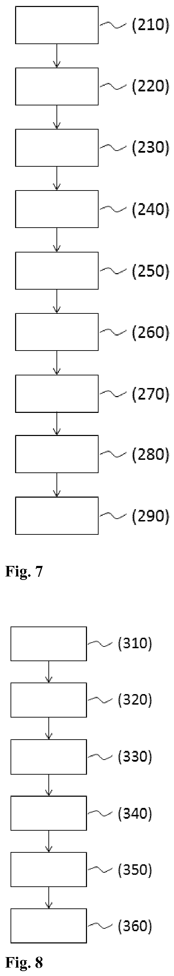

Fig. 7 zeigt eine weitere Ausführungsform des erfindungsgemäßen Verfahrens in Form eines Ablaufdiagramms. Das Verfahren umfasst die Schritte:

| | |
|---|---|
| (210) | Empfangen einer Position einer Sende- und Empfangseinheit, |
| (220) | Empfangen von Daten, |
| | - wobei die Daten von einer Mehrzahl an Funksensoren stammen, |
| | - wobei die Daten jedes Funksensors eine eindeutige Kennung und Zustandsdaten zu einem Zustand eines Objekts, mit dem der Funksensor verbunden ist, umfassen, |
| (230) | Empfangen einer Liste von Objekten, die einem Kollektiv angehören, |

| | |
|---|---|
| (240) | Prüfen anhand der Liste und der empfangenen Daten, ob zu allen Objekten des Kollektivs Zustandsdaten empfangen wurden, |
| (250) | für jedes Objekt, für das Zustandsdaten empfangen wurden: Aktualisieren oder Ergänzen eines Eintrags in einer Datenbank zur Position des Objekts, wobei für die Position des Objekts die Position der Sende- und Empfangseinheit eingetragen wird, |
| (260) | Vergleichen der empfangenen Zustandsdaten miteinander, |
| (270) | Prüfen, ob die Zustandsdaten eines Funksensors eine definierte Abweichung von den Zustandsdaten anderer Funksensoren aufweisen, |
| (280) | für den Fall, dass nicht zu allen Objekten Zustandsdaten empfangen wurden und/oder für den Fall, dass die Zustandsdaten eines Funksensors eine definierte Abweichung von den Zustandsdaten anderer Funksensoren aufweisen: Erzeugen einer Mitteilung zu den fehlenden Objekten und/oder der Abweichung und Übermitteln der Mitteilung an einen Nutzer. |

Fig. 8 zeigt eine weitere Ausführungsform des erfindungsgemäßen Verfahrens in Form eines Ablaufdiagramms. Das Verfahren umfasst die Schritte:

| | |
|---|---|
| (310) | Empfangen von Daten während einer definierten Zeitspanne mittels einer Sende- und Empfangseinheit, |
| | - wobei die Daten von einer Mehrzahl an Funksensoren stammen, |
| | - wobei die Daten jedes Funksensors eine eindeutige Kennung und Zustandsdaten zu einem Zustand eines Objekts, mit dem der Funksensor verbunden ist, umfassen, |
| (320) | Vergleichen der Zustandsdaten miteinander, |
| (330) | Identifizieren derjenigen Funksensoren, die während der definierten Zeitspanne die gleichen oder korrespondierende Zustände anzeigen, |
| (340) | Verknüpfen derjenigen Objekte zu einem Kollektiv, mit denen die identifizierten Funksensoren verbunden sind, |
| (350) | Ermitteln einer Position der Sende- und Empfangseinheit |
| (360) | Aktualisieren von Positionen der Objekte des Kollektivs in einer Datenbank durch Verwenden der Position der Sende- und Empfangseinheit als aktualisierte Positionen der Objekte des Kollektivs. |

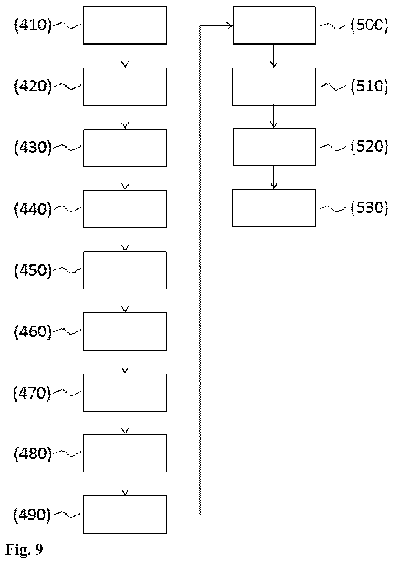

Fig. 9 zeigt eine weitere Ausführungsform des erfindungsgemäßen Verfahrens in Form eines Ablaufdiagramms. Das Verfahren umfasst die Schritte:

| | |
|---|---|
| (410) | Verbinden einer Mehrzahl von Objekten mit jeweils einem Funksensor, |
| (420) | Empfangen von Daten während einer definierten Zeitspanne mittels einer Sende- und Empfangseinheit, |
| | - wobei die Daten von der Mehrzahl an Funksensoren stammen, |
| | - wobei die Daten jedes Funksensors eine eindeutige Kennung und Zustandsdaten zu einem Zustand des Objekts, mit dem der jeweilige Funksensor verbunden ist, umfassen, |
| (430) | Vergleichen der Zustandsdaten miteinander, |
| (440) | Identifizieren derjenigen Funksensoren, die während der definierten Zeitspanne die gleichen oder korrespondierende Zustände anzeigen, |
| (450) | Verknüpfen derjenigen Objekte zu einem Kollektiv, mit denen die identifizierten Funksensoren verbunden sind, |
| (460) | Erfassen von Messwerten zu Zuständen der Objekte des Kollektivs durch die mit den Objekten verbundenen Funksensoren, |
| (470) | Übermitteln von Zustandsdaten zu den Zuständen der Objekte des Kollektivs über eine Kurzstreckenverbindung an die Sende- und Empfangseinheit, |

| | |
|---|---|
| (480) | Vergleichen der Zustandsdaten miteinander, |
| (490) | Identifizieren einer definierten Abweichung der Zustandsdaten eines Funksensors von anderen Funksensoren, |
| (500) | Übermitteln von Informationen zu der identifizierten Abweichung und/oder den Zustandsdaten über eine Langstreckenverbindung an einen Server, |
| (510) | Ermitteln der Position der Sende- und Empfangseinheit, |
| (520) | Übermitteln der Position der Sende- und Empfangseinheit an den Server, |
| (530) | Speichern der Position und der Informationen in einer Datenbank und/oder Anzeigen der Position und der Informationen gegenüber einem Nutzer. |

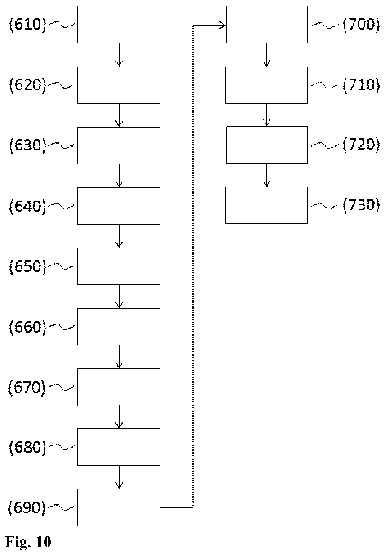

Fig. 10 zeigt eine weitere Ausführungsform des erfindungsgemäßen Verfahrens in Form eines Ablaufdiagramms. Das Verfahren umfasst die Schritte:

| | |
|---|---|
| (610) | Verbinden einer Mehrzahl von Objekten mit jeweils einem Funksensor, |
| (620) | Empfangen von Daten während einer definierten Zeitspanne mittels einer Sende- und Empfangseinheit, |
| | - wobei die Daten von der Mehrzahl an Funksensoren stammen, |
| | - wobei die Daten jedes Funksensors eine eindeutige Kennung und Zustandsdaten zu einem Zustand des Objekts, mit dem der jeweilige Funksensor verbunden ist, umfassen, |
| (630) | Vergleichen der Zustandsdaten miteinander, |
| (640) | Identifizieren derjenigen Funksensoren, die während der definierten Zeitspanne die gleichen oder korrespondierende Zustände anzeigen, |
| (650) | Verknüpfen derjenigen Objekte zu einem Kollektiv, mit denen die identifizierten Funksensoren verbunden sind, |
| (660) | Empfangen einer Position einer Sende- und Empfangseinheit, |
| (670) | Empfangen von Daten, |
| | - wobei die Daten von der Mehrzahl an Funksensoren stammen, |
| | - wobei die Daten jedes Funksensors eine eindeutige Kennung und Zustandsdaten zu einem Zustand eines Objekts, mit dem der Funksensor verbunden ist, umfassen, |
| (680) | Empfangen einer Liste von Objekten, die dem Kollektiv angehören, |
| (690) | Prüfen anhand der Liste und der empfangenen Daten, ob zu allen Objekten des Kollektivs Zustandsdaten empfangen wurden, |
| (700) | für jedes Objekt, für das Zustandsdaten empfangen wurden: Aktualisieren eines Eintrags in einer Datenbank zur Position des Objekts, wobei für die Position des Objekts die Position der Sende- und Empfangseinheit eingetragen wird, |
| (710) | Vergleichen der empfangenen Zustandsdaten miteinander, |
| (720) | Prüfen, ob die Zustandsdaten eines Funksensors eine definierte Abweichung von den Zustandsdaten anderer Funksensoren aufweisen, |
| (730) | für den Fall, dass nicht zu allen Objekten des Kollektivs Zustandsdaten empfangen wurden und/oder für den Fall, dass die Zustandsdaten eines Funksensors eine definierte Abweichung von den Zustandsdaten anderer Funksensoren aufweisen: Erzeugen einer Mitteilung zu den fehlenden Objekten und/oder der Abweichung und Übermitteln der Mitteilung an einen Nutzer. |

## Patentansprüche

1. System umfassend
- eine Mehrzahl von Funksensoren (F₁, F₂, F₃, F₄, F₅),
- eine Sende- und Empfangseinheit (S),
- einen Server (C),
- eine Analyseeinheit (27) und
- Mittel zur Positionserfassung,
- wobei jeder Funksensor (F₁, F₂, F₃, F₄, F₅) mit jeweils einem Objekt (O₁, O₂, O₃, O₄, O₅) verbindbar ist, wobei es sich bei den Objekten (O₁, O₂, O₃, O₄, O₅) um Waren handelt,
- wobei jeder Funksensor (F₁, F₂, F₃, F₄, F₅) konfiguriert ist, Messwerte zum Zustand des mit ihm verbundenen Objekts (O₁, O₂, O₃, O₄, O₅) zu erfassen und Zustandsdaten zum Zustand des Objekts (O₁, O₂, O₃, O₄, O₅) über eine Kurzstreckenverbindung an die Sende- und Empfangseinheit (S) zu übermitteln,
- wobei die Mittel zur Positionserfassung konfiguriert sind, die Position der Sende- und Empfangseinheit (S) zu erfassen,
- wobei die Sende- und Empfangseinheit (S) konfiguriert ist,
- die Zustandsdaten von den Funksensoren (F₁, F₂, F₃, F₄, F₅) zu empfangen,
- die Zustandsdaten an die Analyseeinheit (27) zu übermitteln,
**dadurch gekennzeichnet, dass**
- die Analyseeinheit (27) konfiguriert ist,
- die übermittelten Zustandsdaten von verschiedenen Funksensoren miteinander zu vergleichen,
- Abweichungen in den Zustandsdaten der verschiedenen Funksensoren zu identifizieren,
- wobei die Sende- und Empfangseinheit (S) konfiguriert ist, Informationen zu den Abweichungen über eine Langstreckenverbindung an den Server (C) zu übermitteln,
- wobei der Server (C) konfiguriert ist, Informationen zu den Abweichungen und der Position gegenüber einem Nutzer anzuzeigen und/oder in einer Datenbank zu speichern,
- wobei jeder Funksensor (F₁, F₂, F₃, F₄, F₅) einen Verpackungszustandssensor umfasst, wobei der Verpackungszustandssensor erfasst, ob eine Verpackung, in der sich eine Ware befindet, geschlossen oder geöffnet ist.

2. System gemäß Anspruch 1, wobei die Mittel zur Positionserfassung ein GPS-Sensor (25) sind, der die Position der Sende- und Empfangseinheit (S) erfasst.

3. System gemäß Anspruch 1, wobei die Mittel zur Positionserfassung konfiguriert sind, die Position der Sende- und Empfangseinheit (S) aus einer Mobilfunkzelle, in der sich Sende- und Empfangseinheit (S) befindet, abzuleiten.

4. System gemäß einem der Ansprüche 1 bis 3, wobei die Funksensoren (F₁, F₂, F₃, F₄, F₅) konfiguriert sind, Advertising-Datenpakete zu versenden, die die jeweilige eindeutige Kennung und die jeweiligen Zustandsdaten umfassen und wobei die Sende- und Empfangseinheit (S) konfiguriert ist, die Advertising-Datenpakete zu empfangen und die eindeutigen Kennungen und die Zustandsdaten aus den Advertising-Datenpaketen zu extrahieren.

5. System gemäß einem der Ansprüche 1 bis 4, wobei die Zustandsdaten Beschleunigungsdaten umfassen, aus denen sich die Lagen und/oder Lageänderungen der Objekte (O₁, O₂, O₃, O₄, O₅) ermitteln lassen.

6. System gemäß einem der Ansprüche 1 bis 5, wobei die Zustandsdaten Informationen zum Zustand von Verpackungen, in den sich die Objekte (O₁, O₂, O₃, O₄, O₅) befinden, erfassen können.

7. Verfahren umfassend die Schritte:
- Verbinden einer Mehrzahl von Objekten (O₁, O₂, O₃, O₄, O₅) mit jeweils einem Funksensor (F₁, F₂, F₃, F₄, F₅), wobei es sich bei den Objekten (O₁, O₂, O₃, O₄, O₅) um Waren handelt,
- Erfassen von Messwerten zu Zuständen der Objekte (O₁, O₂, O₃, O₄, O₅) durch die mit den Objekten (O₁, O₂, O₃, O₄, O₅) verbundenen Funksensoren (F₁, F₂, F₃, F₄, F₅),
- Übermitteln von Zustandsdaten zu den Zuständen der Objekte (O₁, O₂, O₃, O₄, O₅) über eine Kurzstreckenverbindung an eine Sende- und Empfangseinheit (S),
- Ermitteln der Position der Sende- und Empfangseinheit (S),
- Übermitteln der Position der Sende- und Empfangseinheit (S) an den Server (C),
- Speichern der Position und der Informationen in einer Datenbank und/oder Anzeigen der Position und der Informationen gegenüber einem Nutzer,
**gekennzeichnet durch**
- Vergleichen der Zustandsdaten von verschiedenen Funksensoren miteinander,
- Identifizieren einer definierten Abweichung der Zustandsdaten eines Funksensors (F₁, F₂, F₃, F₄, F₅) von anderen Funksensoren (F₁, F₂, F₃, F₄, F₅),
- Übermitteln von Informationen zu der identifizierten Abweichung über eine Langstreckenverbindung an einen Server (C),
wobei jeder Funksensor (F₁, F₂, F₃, F₄, F₅) einen Verpackungszustandssensor umfasst, wobei der Verpackungszustandssensor erfasst, ob eine Verpackung, in der sich eine Ware befindet, geschlossen oder geöffnet ist.

8. Verfahren gemäß Anspruch 7, umfassend die Schritte:
- Empfangen von Daten während einer definierten Zeitspanne,
- wobei die Daten von einer Mehrzahl an Funksensoren (F₁, F₂, F₃, F₄, F₅) stammen,
- wobei die Daten jedes Funksensors (F₁, F₂, F₃, F₄, F₅) eine eindeutige Kennung und Zustandsdaten zu einem Zustand eines Objekts (O₁, O₂, O₃, O₄, O₅), mit dem der Funksensor (F₁, F₂, F₃, F₄, F₅) verbunden ist, umfassen,
- Vergleichen der Zustandsdaten miteinander,
- Identifizieren derjenigen Funksensoren (F₁, F₂, F₃, F₄, F₅), die während der definierten Zeitspanne die gleichen oder korrespondierende Zustände anzeigen,
- Verknüpfen derjenigen Objekte (O₁, O₂, O₃, O₄, O₅) zu einem Kollektiv, mit denen die identifizierten Funksensoren (F₁, F₂, F₃, F₄, F₅) verbunden sind.

9. Verfahren gemäß einem der Ansprüche 7 oder 8, umfassend die Schritte:
- Empfangen von Daten während einer definierten Zeitspanne mittels einer Sende- und Empfangseinheit (S),
- wobei die Daten von einer Mehrzahl an Funksensoren (F₁, F₂, F₃, F₄, F₅) stammen,
- wobei die Daten jedes Funksensors (F₁, F₂, F₃, F₄, F₅) eine eindeutige Kennung und Zustandsdaten zu einem Zustand eines Objekts (O₁, O₂, O₃, O₄, O₅), mit dem der Funksensor (F₁, F₂, F₃, F₄, F₅) verbunden ist, umfassen,
- Vergleichen der Zustandsdaten miteinander,
- Identifizieren derjenigen Funksensoren (F₁, F₂, F₃, F₄, F₅), die während der definierten Zeitspanne die gleichen oder korrespondierende Zustände anzeigen,
- Verknüpfen derjenigen Objekte (O₁, O₂, O₃, O₄, O₅) zu einem Kollektiv, mit denen die identifizierten Funksensoren (F₁, F₂, F₃, F₄, F₅) verbunden sind,
- Ermitteln einer Position der Sende- und Empfangseinheit (S),
- Aktualisieren oder Ergänzen von Positionen der Objekte (O₁, O₂, O₃, O₄, O₅) des Kollektivs in einer Datenbank durch Verwenden der Position der Sende- und Empfangseinheit (S) als aktualisierte Positionen der Objekte (O₁, O₂, O₃, O₄, O₅) des Kollektivs.

10. Verfahren gemäß einem der Ansprüche 7 bis 9, umfassend die Schritte:
- Verbinden einer Mehrzahl von Objekten (O₁, O₂, O₃, O₄, O₅) mit jeweils einem Funksensor (F₁, F₂, F₃, F₄, F₅),
- Empfangen von Daten während einer definierten Zeitspanne mittels einer Sende- und Empfangseinheit (S),
- wobei die Daten von der Mehrzahl an Funksensoren (F₁, F₂, F₃, F₄, F₅) stammen,
- wobei die Daten jedes Funksensors (F₁, F₂, F₃, F₄, F₅) eine eindeutige Kennung und Zustandsdaten zu einem Zustand des Objekts (O₁, O₂, O₃, O₄, O₅), mit dem der jeweilige Funksensor (F₁, F₂, F₃, F₄, F₅) verbunden ist, umfassen,
- Vergleichen der Zustandsdaten miteinander,
- Identifizieren derjenigen Funksensoren (F₁, F₂, F₃, F₄, F₅), die während der definierten Zeitspanne die gleichen oder korrespondierende Zustände anzeigen,
- Verknüpfen derjenigen Objekte (O₁, O₂, O₃, O₄, O₅) zu einem Kollektiv, mit denen die identifizierten Funksensoren (F₁, F₂, F₃, F₄, F₅) verbunden sind,
- Empfangen einer Position einer Sende- und Empfangseinheit (S),
- Empfangen von Daten,
- wobei die Daten von der Mehrzahl an Funksensoren (F₁, F₂, F₃, F₄, F₅) stammen,
- wobei die Daten jedes Funksensors (F₁, F₂, F₃, F₄, F₅) eine eindeutige Kennung und Zustandsdaten zu einem Zustand eines Objekts (O₁, O₂, O₃, O₄, O₅), mit dem der Funksensor (F₁, F₂, F₃, F₄, F₅) verbunden ist, umfassen,
- Empfangen einer Liste von Objekten (O₁, O₂, O₃, O₄, O₅), die dem Kollektiv angehören,
- Prüfen anhand der Liste und der empfangenen Daten, ob zu allen Objekten (O₁, O₂, O₃, O₄, O₅) des Kollektivs Zustandsdaten empfangen wurden,
- für jedes Objekt (O₁, O₂, O₃, O₄, O₅), für das Zustandsdaten empfangen wurden: Aktualisieren oder Ergänzen eines Eintrags in einer Datenbank zur Position des Objekts (O₁, O₂, O₃, O₄, O₅), wobei für die Position des Objekts (O₁, O₂, O₃, O₄, O₅) die Position der Sende- und Empfangseinheit (S) eingetragen wird,
- Vergleichen der empfangenen Zustandsdaten miteinander,
- Prüfen, ob die Zustandsdaten eines Funksensors (F₁, F₂, F₃, F₄, F₅) eine definierte Abweichung von den Zustandsdaten anderer Funksensoren (F₁, F₂, F₃, F₄, F₅) aufweisen,
- für den Fall, dass nicht zu allen Objekten (O₁, O₂, O₃, O₄, O₅) des Kollektivs Zustandsdaten empfangen wurden und/oder für den Fall, dass die Zustandsdaten eines Funksensors (F₁, F₂, F₃, F₄, F₅) eine definierte Abweichung von den Zustandsdaten anderer Funksensoren (F₁, F₂, F₃, F₄, F₅) aufweisen: Erzeugen einer Mitteilung zu den fehlenden Objekten (O₁, O₂, O₃, O₄, O₅) und/oder der Abweichung und Übermitteln der Mitteilung an einen Nutzer.

11. Computerprogrammprodukt umfassend einen Programmcode, der auf einem Datenträger gespeichert ist, und der einen Computer dazu veranlasst, die folgenden Schritte auszuführen, wenn der Programmcode in einen Arbeitsspeicher des Computers geladen ist:
- Empfangen von Daten während einer definierten Zeitspanne,
- wobei die Daten von einer Mehrzahl an Funksensoren (F₁, F₂, F₃, F₄, F₅) stammen,
- wobei die Daten jedes Funksensors (F₁, F₂, F₃, F₄, F₅) eine eindeutige Kennung und Zustandsdaten zu einem Zustand eines Objekts (O₁, O₂, O₃, O₄, O₅), mit dem der Funksensor (F₁, F₂, F₃, F₄, F₅) verbunden ist, umfassen,
- Vergleichen der Zustandsdaten von verschiedenen Funksensoren miteinander,
- Identifizieren derjenigen Funksensoren (F₁, F₂, F₃, F₄, F₅), die während der definierten Zeitspanne die gleichen oder korrespondierende Zustände anzeigen,
- Verknüpfen derjenigen Objekte (O₁, O₂, O₃, O₄, O₅) zu einem Kollektiv, mit denen die identifizierten Funksensoren (F₁, F₂, F₃, F₄, F₅) verbunden sind,
wobei es sich bei den Objekten (O₁, O₂, O₃, O₄, O₅) um Waren handelt,
wobei jeder Funksensor (F₁, F₂, F₃, F₄, F₅) einen Verpackungszustandssensor umfasst, wobei der Verpackungszustandssensor erfasst, ob eine Verpackung, in der sich eine Ware befindet, geschlossen oder geöffnet ist.

12. Computerprogrammprodukt gemäß Anspruch 11, wobei der Programmcode den Computer ferner dazu veranlasst, die folgenden Schritte auszuführen, wenn der Programmcode in den Arbeitsspeicher des Computers geladen ist:
- Empfangen einer Position einer Sende- und Empfangseinheit (S),
- Empfangen von Daten,
- wobei die Daten von einer Mehrzahl an Funksensoren (F₁, F₂, F₃, F₄, F₅) stammen,
- wobei die Daten jedes Funksensors (F₁, F₂, F₃, F₄, F₅) eine eindeutige Kennung und Zustandsdaten zu einem Zustand eines Objekts (O₁, O₂, O₃, O₄, O₅), mit dem der Funksensor (F₁, F₂, F₃, F₄, F₅) verbunden ist, umfassen,
- Empfangen einer Liste von Objekten (O₁, O₂, O₃, O₄, O₅), die einem Kollektiv angehören,
- Prüfen anhand der Liste und der empfangenen Daten, ob zu allen Objekten (O₁, O₂, O₃, O₄, O₅) des Kollektivs Zustandsdaten empfangen wurden,
- für jedes Objekt (O₁, O₂, O₃, O₄, O₅), für das Zustandsdaten empfangen wurden: Aktualisieren oder Ergänzen eines Eintrags in einer Datenbank zur Position des Objekts (O₁, O₂, O₃, O₄, O₅), wobei für die Position des Objekts (O₁, O₂, O₃, O₄, O₅) die Position der Sende- und Empfangseinheit (S) eingetragen wird,
- Vergleichen der empfangenen Zustandsdaten miteinander,
- Prüfen, ob die Zustandsdaten eines Funksensors (F₁, F₂, F₃, F₄, F₅) eine definierte Abweichung von den Zustandsdaten anderer Funksensoren (F₁, F₂, F₃, F₄, F₅) aufweisen,
- für den Fall, dass nicht zu allen Objekten (O₁, O₂, O₃, O₄, O₅) Zustandsdaten empfangen wurden und/oder für den Fall, dass die Zustandsdaten eines Funksensors (F₁, F₂, F₃, F₄, F₅) eine definierte Abweichung von den Zustandsdaten anderer Funksensoren (F₁, F₂, F₃, F₄, F₅) aufweisen: Erzeugen einer Mitteilung zu den fehlenden Objekten (O₁, O₂, O₃, O₄, O₅) und/oder der Abweichung und Übermitteln der Mitteilung an einen Nutzer.

## Claims

1. System comprising
- a plurality of wireless sensors (F₁, F₂, F₃, F₄, F₅),
- a transceiver unit (S),
- a server (C),
- an analysis unit (27) and
- position-detection means,
- wherein each wireless sensor (F₁, F₂, F₃, F₄, F₅) can be connected to one object (O₁, O₂, O₃, O₄, O₅) each, wherein the objects (O₁, O₂, O₃, O₄, O₅) are goods,
- wherein each wireless sensor (F₁, F₂, F₃, F₄, F₅) is configured to acquire measured values on the state of the object (O₁, O₂, O₃, O₄, O₅) connected to said sensor, and to transmit state data on the state of the object (O₁, O₂, O₃, O₄, O₅) to the transceiver unit (S) over a short-range link,
- wherein the position-detection means are configured to detect the position of the transceiver unit (S),
- wherein the transceiver unit (S) is configured
- to receive the state data from the wireless sensors (F₁, F₂, F₃, F₄, F₅),
- to transmit the state data to the analysis unit (27),
**characterized in that**
- the analysis unit (27) is configured
- to compare with each other the items of transmitted state data from various wireless sensors,
- to identify differences in the state data of the various wireless sensors,
- wherein the transceiver unit (S) is configured to transmit information on the differences to the server (C) via a long-range link,
- wherein the server (C) is configured to display to a user and/or to store in a database, information on the differences and on the position,
- wherein each wireless sensor (F₁, F₂, F₃, F₄, F₅) comprises a packaging state sensor, wherein the packaging state sensor detects whether packaging containing goods is closed or open.

2. System according to Claim 1, wherein the position-detection means are a GPS sensor (25), which detects the position of the transceiver unit (S).

3. System according to Claim 1, wherein the position-detection means are configured to derive the position of the transceiver unit (S) from a mobile communications cell in which the transceiver unit (S) is located.

4. System according to any of Claims 1 to 3, wherein the wireless sensors (F₁, F₂, F₃, F₄, F₅) are configured to send advertising data packets, which comprise the associated unique identifier and the associated state data, and wherein the transceiver unit (S) is configured to receive the advertising data packets and to extract the unique identifiers and the state data from the advertising data packets.

5. System according to any of Claims 1 to 4, wherein the state data comprises acceleration data, from which the orientations and/or changes in orientation of the objects (O₁, O₂, O₃, O₄, O₅) can be determined.

6. System according to any of Claims 1 to 5, wherein the state data can acquire information on the state of packaging containing the objects (O₁, O₂, O₃, O₄, O₅).

7. Method comprising the steps of:
- connecting a plurality of objects (O₁, O₂, O₃, O₄, O₅) to one wireless sensor (F₁, F₂, F₃, F₄, F₅) each, wherein the objects (O₁, O₂, O₃, O₄, O₅) are goods,
- acquiring measured values on states of the objects (O₁, O₂, O₃, O₄, O₅) by means of the wireless sensors (F₁, F₂, F₃, F₄, F₅) connected to the objects (O₁, O₂, O₃, O₄, O₅),
- transmitting state data on the states of the objects (O₁, O₂, O₃, O₄, O₅) to a transceiver unit (S) over a short-range link,
- determining the position of the transceiver unit (S),
- transmitting the position of the transceiver unit (S) to the server (C),
- storing the position and the information in a database and/or displaying the position and the information to a user, **characterized by**
- comparing the items of state data from various wireless sensors with each other,
- identifying a defined difference in the state data of a radio sensor (F₁, F₂, F₃, F₄, F₅) from other radio sensors (F₁, F₂, F₃, F₄, F₅),
- transmitting information on the identified difference to a server (C) via a long-range link, wherein each wireless sensor (F₁, F₂, F₃, F₄, F₅) comprises a packaging state sensor, where the packaging state sensor detects whether packaging containing goods is closed or open.

8. Method according to Claim 7, comprising the steps of:
- receiving data during a defined time interval,
- wherein the data originates from a plurality of wireless sensors (F₁, F₂, F₃, F₄, F₅),
- wherein the data from each wireless sensor (F₁, F₂, F₃, F₄, F₅) comprises a unique identifier and state data on a state of an object (O₁, O₂, O₃, O₄, O₅) to which the wireless sensor (F₁, F₂, F₃, F₄, F₅) is connected,
- comparing the items of state data with each other,
- identifying those wireless sensors (F₁, F₂, F₃, F₄, F₅) that indicate identical or corresponding states during the defined time interval,
- associating into a collective those objects (O₁, O₂, O₃, O₄, O₅) to which the identified wireless sensors (F₁, F₂, F₃, F₄, F₅) are connected.

9. Method according to either of Claims 7 and 8, comprising the steps of:
- receiving data during a defined time interval by means of a transceiver unit (S),
- wherein the data originates from a plurality of wireless sensors (F₁, F₂, F₃, F₄, F₅),
- wherein the data from each wireless sensor (F₁, F₂, F₃, F₄, F₅) comprises a unique identifier and state data on a state of an object (O₁, O₂, O₃, O₄, O₅) to which the wireless sensor (F₁, F₂, F₃, F₄, F₅) is connected,
- comparing the items of state data with each other,
- identifying those wireless sensors (F₁, F₂, F₃, F₄, F₅) that indicate identical or corresponding states during the defined time interval,
- associating into a collective those objects (O₁, O₂, O₃, O₄, O₅) to which the identified wireless sensors (F₁, F₂, F₃, F₄, F₅) are connected,
- determining a position of the transceiver unit (S),
- updating or adding positions of the objects (O₁, O₂, O₃, O₄, O₅) of the collective in a database by using the position of the transceiver unit (S) as the updated positions of the objects (O₁, O₂, O₃, O₄, O₅) of the collective.

10. Method according to any of Claims 7 to 9, comprising the steps of:
- connecting a plurality of objects (O₁, O₂, O₃, O₄, O₅) to one wireless sensor (F₁, F₂, F₃, F₄, F₅) each,
- receiving data during a defined time interval by means of a transceiver unit (S),
- wherein the data originates from the plurality of wireless sensors (F₁, F₂, F₃, F₄, F₅),
- wherein the data from each wireless sensor (F₁, F₂, F₃, F₄, F₅) comprises a unique identifier and state data on a state of the object (O₁, O₂, O₃, O₄, O₅) to which the respective wireless sensor (F₁, F₂, F₃, F₄, F₅) is connected,
- comparing the items of state data with each other,
- identifying those wireless sensors (F₁, F₂, F₃, F₄, F₅) that indicate identical or corresponding states during the defined time interval,
- associating into a collective those objects (O₁, O₂, O₃, O₄, O₅) to which the identified wireless sensors (F₁, F₂, F₃, F₄, F₅) are connected,
- receiving a position of a transceiver unit (S),
- receiving data,
- wherein the data originates from the plurality of wireless sensors (F₁, F₂, F₃, F₄, F₅),
- wherein the data from each wireless sensor (F₁, F₂, F₃, F₄, F₅) comprises a unique identifier and state data on a state of an object (O₁, O₂, O₃, O₄, O₅) to which the wireless sensor (F₁, F₂, F₃, F₄, F₅) is connected,
- receiving a list of objects (O₁, O₂, O₃, O₄, O₅) that belong to the collective,
- checking against the list and the received data whether state data has been received for all the objects (O₁, O₂, O₃, O₄, O₅) of the collective,
- for each object (O₁, O₂, O₃, O₄, O₅) for which state data has been received: updating or adding an entry in a database on the position of the object (O₁, O₂, O₃, O₄, O₅), wherein the position of the transceiver unit (S) is entered for the position of the object (O₁, O₂, O₃, O₄, O₅),
- comparing the received items of state data with each other,
- checking whether the state data of a wireless sensor (F₁, F₂, F₃, F₄, F₅) has a defined difference from the state data of other wireless sensors (F₁, F₂, F₃, F₄, F₅),
- in the event that state data was not received for all the objects (O₁, O₂, O₃, O₄, O₅) of the collective, and/or in the event that the state data of a wireless sensor (F₁, F₂, F₃, F₄, F₅) has a defined difference from the state data of other wireless sensors (F₁, F₂, F₃, F₄, F₅): generating a notification on the missing objects (O₁, O₂, O₃, O₄, O₅) and/or on the difference and communicating the notification to a user.

11. Computer program product comprising program code which is stored on a data carrier and which causes a computer to perform the following steps when the program code is loaded into a main memory of the computer:
- receiving data during a defined time interval,
- wherein the data originates from a plurality of wireless sensors (F₁, F₂, F₃, F₄, F₅),
- wherein the data from each wireless sensor (F₁, F₂, F₃, F₄, F₅) comprises a unique identifier and state data on a state of an object (O₁, O₂, O₃, O₄, O₅) to which the wireless sensor (F₁, F₂, F₃, F₄, F₅) is connected,
- comparing the items of state data from various wireless sensors with each other,
- identifying those wireless sensors (F₁, F₂, F₃, F₄, F₅) that indicate identical or corresponding states during the defined time interval,
- associating into a collective those objects (O₁, O₂, O₃, O₄, O₅) to which the identified wireless sensors (F₁, F₂, F₃, F₄, F₅) are connected,
wherein the objects (O₁, O₂, O₃, O₄, O₅) are goods, wherein each wireless sensor (F₁, F₂, F₃, F₄, F₅) comprises a packaging state sensor, where the packaging state sensor detects whether packaging containing goods is closed or open.

12. Computer program product according to Claim 11, wherein the program code further causes the computer to perform the following steps when the program code is loaded into the main memory of the computer:
- receiving a position of a transceiver unit (S),
- receiving data,
- wherein the data originates from a plurality of wireless sensors (F₁, F₂, F₃, F₄, F₅),
- wherein the data from each wireless sensor (F₁, F₂, F₃, F₄, F₅) comprises a unique identifier and state data on a state of an object (O₁, O₂, O₃, O₄, O₅) to which the wireless sensor (F₁, F₂, F₃, F₄, F₅) is connected,
- receiving a list of objects (O₁, O₂, O₃, O₄, O₅) that belong to a collective,
- checking against the list and the received data whether state data has been received for all the objects (O₁, O₂, O₃, O₄, O₅) of the collective,
- for each object (O₁, O₂, O₃, O₄, O₅) for which state data has been received: updating or adding an entry in a database on the position of the object (O₁, O₂, O₃, O₄, O₅), wherein the position of the transceiver unit (S) is entered for the position of the object (O₁, O₂, O₃, O₄, O₅),
- comparing the received items of state data with each other,
- checking whether the state data of a wireless sensor (F₁, F₂, F₃, F₄, F₅) has a defined difference from the state data of other wireless sensors (F₁, F₂, F₃, F₄, F₅),
- in the event that state data was not received for all the objects (O₁, O₂, O₃, O₄, O₅), and/or in the event that the state data of a wireless sensor (F₁, F₂, F₃, F₄, F₅) has a defined difference from the state data of other wireless sensors (F₁, F₂, F₃, F₄, F₅): generating a notification on the missing objects (O₁, O₂, O₃, O₄, O₅) and/or on the difference and communicating the notification to a user.

## Revendications

1. Système, comprenant
- une pluralité de capteurs radio (F₁, F₂, F₃, F₄, F₅),
- une unité d'émission et de réception (S),
- un serveur (C),
- une unité d'analyse (27) et
- des moyens de détection de position,
- chaque capteur radio (F₁, F₂, F₃, F₄, F₅) pouvant être connecté à un objet respectif (O₁, O₂, O₃, O₄, O₅), les objets (O₁, O₂, O₃, O₄, O₅) étant des marchandises,
- chaque capteur radio (F₁, F₂, F₃, F₄, F₅) étant configuré pour détecter des valeurs de mesure concernant l'état de l'objet (O₁, O₂, O₃, O₄, O₅) auquel il est connecté, et pour transmettre des données d'état concernant l'état de l'objet (O₁, O₂, O₃, O₄, O₅) par l'intermédiaire d'une liaison à courte portée à l'unité d'émission et de réception (S),
- les moyens de détection de position étant configurés pour détecter la position de l'unité d'émission et de réception (S),
- l'unité d'émission et de réception (S) étant configurée pour :
- recevoir les données d'état des capteurs radio (F₁, F₂, F₃, F₄, F₅),
- transmettre les données d'état à l'unité d'analyse (27),
**caractérisé en ce que**
- l'unité d'analyse (27) est configurée pour :
- comparer les unes aux autres les données d'état transmises par différents capteurs radio,
- identifier des écarts dans les données d'état des différents capteurs radio,
- l'unité d'émission et de réception (S) étant configurée pour transmettre des informations concernant les écarts par l'intermédiaire d'une liaison longue portée au serveur (C),
- le serveur (C) étant configuré pour présenter des informations concernant les écarts et la position à un utilisateur et/ou pour les stocker dans une base de données,
- chaque capteur radio (F₁, F₂, F₃, F₄, F₅) comprenant un capteur d'état d'emballage, le capteur d'état d'emballage détectant si un emballage dans lequel se trouve une marchandise est fermé ou ouvert.

2. Système selon la revendication 1, dans lequel les moyens de détection de position sont un capteur GPS (25) qui détecte la position de l'unité d'émission et de réception (S).

3. Système selon la revendication 1, dans lequel les moyens de détection de position sont configurés pour déduire la position de l'unité d'émission et de réception (S) à partir d'une cellule de téléphonie mobile dans laquelle se trouve l'unité d'émission et de réception (S) .

4. Système selon l'une quelconque des revendications 1 à 3, dans lequel les capteurs radio (F₁, F₂, F₃, F₄, F₅) sont configurés pour envoyer des paquets de données de publicité contenant l'identification unique respectif et les données d'état respectives, et dans lequel l'unité d'émission et de réception (S) est configurée pour recevoir les paquets de données de publicité et extraire les identifications uniques et les données d'état des paquets de données de publicité.

5. Système selon l'une quelconque des revendications 1 à 4, dans lequel les données d'état comprennent des données d'accélération à partir desquelles les positions et/ou les changements de position des objets (O₁, O₂, O₃, O₄, O₅) peuvent être déterminés.

6. Système selon l'une quelconque des revendications 1 à 5, dans lequel les données d'état peuvent comprendre des informations concernant l'état d'emballages dans lesquels se trouvent les objets (O₁, O₂, O₃, O₄, O₅).

7. Procédé comprenant les étapes consistant à :
- connecter une pluralité d'objets (O₁, O₂, O₃, O₄, O₅) à un capteur radio respectif (F₁, F₂, F₃, F₄, F₅), les objets (O₁, O₂, O₃, O₄, O₅) étant des marchandises,
- détecter des valeurs de mesure concernant des états des objets (O₁, O₂, O₃, O₄, O₅) au moyen des capteurs radio (F₁, F₂, F₃, F₄, F₅) connectés aux objets (O₁, O₂, O₃, O₄, O₅),
- transmettre des données d'état concernant les états des objets (O₁, O₂, O₃, O₄, O₅) par l'intermédiaire d'une liaison à courte portée à une unité d'émission et de réception (S),
- déterminer la position de l'unité d'émission et de réception (S),
- transmettre la position de l'unité d'émission et de réception (S) au serveur (C),
- stocker la position et les informations dans une base de données et/ou présenter la position et les informations à un utilisateur, **caractérisé par** le fait de
- comparer les unes aux autres les données d'état de différents capteurs radio,
- identifier un écart défini des données d'état d'un capteur radio (F₁, F₂, F₃, F₄, F₅) par rapport à d'autres capteurs radio (F₁, F₂, F₃, F₄, F₅),
- transmettre des informations concernant l'écart identifié par l'intermédiaire d'une liaison longue portée à un serveur (C),
- chaque capteur radio (F₁, F₂, F₃, F₄, F₅) comprenant un capteur d'état d'emballage, le capteur d'état d'emballage détectant si un emballage dans lequel se trouve une marchandise est fermé ou ouvert.

8. Procédé selon la revendication 7, comprenant les étapes consistant à :
- recevoir des données pendant une période de temps définie,
- les données provenant d'une pluralité de capteurs radio (F1, F₂, F₃, F₄, F₅),
- les données de chaque capteur radio (F₁, F₂, F₃, F₄, F₅) comprenant une identification unique et des données d'état concernant un état d'un objet (O₁, O₂, O₃, O₄, O₅) auquel le capteur radio (F₁, F₂, F₃, F₄, F₅) est connecté,
- comparer les unes aux autres les données d'état,
- identifier les capteurs radio (F₁, F₂, F₃, F₄, F₅) qui indiquent les mêmes états ou des états correspondants pendant la période de temps définie,
- combiner les objets (O₁, O₂, O₃, O₄, O₅) auxquels sont connectés les capteurs radio identifiés (F₁, F₂, F₃, F₄, F₅) en un collectif.

9. Procédé selon l'une des revendications 7 ou 8, comprenant les étapes consistant à :
- recevoir des données pendant une période de temps définie au moyen d'une unité d'émission et de réception (S),
- les données provenant d'une pluralité de capteurs radio (F₁, F₂, F₃, F₄, F₅),
- les données de chaque capteur radio (F₁, F₂, F₃, F₄, F₅) comprenant une identification unique et des données d'état concernant un état d'un objet (O₁, O₂, O₃, O₄, O₅) auquel le capteur radio (F₁, F₂, F₃, F₄, F₅) est connecté,
- comparer les unes aux autres les données d'état,
- identifier les capteurs radio (F₁, F₂, F₃, F₄, F₅) qui indiquent les mêmes états ou des états correspondants pendant la période de temps définie,
- combiner les objets (O₁, O₂, O₃, O₄, O₅) auxquels sont connectés les capteurs radio identifiés (F₁, F₂, F₃, F₄, F₅) en un collectif.
- déterminer une position de l'unité d'émission et de réception (S),
- mettre à jour ou compléter les positions des objets (O₁, O₂, O₃, O₄, O₅) du collectif dans une base de données en utilisant la position de l'unité d'émission et de réception (S) en tant que positions mises à jour des objets (O₁, O₂, O₃, O₄, O₅) du collectif.

10. Procédé selon l'une quelconque des revendications 7 à 9, comprenant les étapes consistant à :
- connecter une pluralité d'objets (O₁, O₂, O₃, O₄, O₅) à un capteur radio respectif (F₁, F₂, F₃, F₄, F₅),
- recevoir des données pendant une période de temps définie au moyen d'une unité d'émission et de réception (S),
- les données provenant de la pluralité de capteurs radio (F₁, F₂, F₃, F₄, F₅),
- les données de chaque capteur radio (F₁, F₂, F₃, F₄, F₅) comprenant une identification unique et des données d'état concernant un état d'un objet (O₁, O₂, O₃, O₄, O₅) auquel le capteur radio respectif (F₁, F₂, F₃, F₄, F₅) est connecté,
- comparer les unes aux autres les données d'état,
- identifier les capteurs radio (F₁, F₂, F₃, F₄, F₅) qui indiquent les mêmes états ou des états correspondants pendant la période de temps définie,
- combiner les objets (O₁, O₂, O₃, O₄, O₅) auxquels sont connectés les capteurs radio identifiés (F₁, F₂, F₃, F₄, F₅) en un collectif.
- recevoir une position d'une unité d'émission et de réception (S),
- recevoir des données,
- les données provenant de la pluralité de capteurs radio (F₁, F₂, F₃, F₄, F₅),
- les données de chaque capteur radio (F₁, F₂, F₃, F₄, F₅) comprenant une identification unique et des données d'état concernant un état d'un objet (O₁, O₂, O₃, O₄, O₅) auquel le capteur radio (F₁, F₂, F₃, F₄, F₅) est connecté,
- recevoir une liste d'objets (O₁, O₂, O₃, O₄, O₅) qui appartiennent au collectif,
- vérifier, à l'aide de la liste et des données reçues, si des données d'état ont été reçues pour tous les objets (O₁, O₂, O₃, O₄, O₅) du collectif,
- pour chaque objet (O₁, O₂, O₃, O₄, O₅) pour lequel des données d'état ont été reçues : mettre à jour ou compléter une entrée dans une base de données concernant la position de l'objet (O₁, O₂, O₃, O₄, O₅), la position de l'unité d'émission et de réception (S) étant enregistrée pour la position de l'objet (O₁, O₂, O₃, O₄, O₅),
- comparer les unes aux autres les données d'état reçues,
- vérifier si les données d'état d'un capteur radio (F₁, F₂, F₃, F₄, F₅) présentent un écart défini par rapport aux données d'état d'autres capteurs radio (F₁, F₂, F₃, F₄, F₅),
- dans le cas où des données d'état n'ont pas été reçues pour tous les objets (O₁, O₂, O₃, O₄, O₅) du collectif et/ou dans le cas où les données d'état d'un capteur radio (F₁, F₂, F₃, F₄, F₅) présentent un écart défini par rapport aux données d'état d'autres capteurs radio (F₁, F₂, F₃, F₄, F₅) : générer une notification concernant les objets manquants (O₁, O₂, O₃, O₄, O₅) et/ou l'écart, et transmettre la notification à un utilisateur.

11. Produit de programme d'ordinateur comprenant un code de programme stocké sur un support de données et qui amène un ordinateur, lorsque le code de programme est chargé dans une mémoire de travail de l'ordinateur, à exécuter les étapes consistant à :
- recevoir des données pendant une période de temps définie,
- les données provenant d'une pluralité de capteurs radio (F₁, F₂, F₃, F₄, F₅),
- les données de chaque capteur radio (F₁, F₂, F₃, F₄, F₅) comprenant une identification unique et des données d'état concernant un état d'un objet (O₁, O₂, O₃, O₄, O₅) auquel le capteur radio (F₁, F₂, F₃, F₄, F₅) est connecté,
- comparer les unes aux autres les données d'état de différents capteurs radio,
- identifier les capteurs radio (F₁, F₂, F₃, F₄, F₅) qui indiquent les mêmes états ou des états correspondants pendant la période de temps définie,
- combiner les objets (O₁, O₂, O₃, O₄, O₅) auxquels sont connectés les capteurs radio identifiés (F₁, F₂, F₃, F₄, F₅) en un collectif,
les objets (O₁, O₂, O₃, O₄, O₅) étant des marchandises,
- chaque capteur radio (F₁, F₂, F₃, F₄, F₅) comprenant un capteur d'état d'emballage, le capteur d'état d'emballage détectant si un emballage dans lequel se trouve une marchandise est fermé ou ouvert.

12. Produit de programme d'ordinateur selon la revendication 11, dans lequel le code de programme amène en outre l'ordinateur, lorsque le code de programme est chargé dans la mémoire de travail de l'ordinateur, à exécuter les étapes suivantes :
- recevoir une position d'une unité d'émission et de réception (S),
- recevoir des données,
- les données provenant d'une pluralité de capteurs radio (F₁, F₂, F₃, F₄, F₅),
- les données de chaque capteur radio (F₁, F₂, F₃, F₄, F₅) comprenant une identification unique et des données d'état concernant un état d'un objet (O₁, O₂, O₃, O₄, O₅) auquel le capteur radio (F₁, F₂, F₃, F₄, F₅) est connecté,
- recevoir une liste d'objets (O₁, O₂, O₃, O₄, O₅) qui appartiennent à un collectif,
- vérifier, à l'aide de la liste et des données reçues, si des données d'état ont été reçues pour tous les objets (O₁, O₂, O₃, O₄, O₅) du collectif,
- pour chaque objet (O₁, O₂, O₃, O₄, O₅) pour lequel des données d'état ont été reçues : mettre à jour ou compléter une entrée dans une base de données concernant la position de l'objet (O₁, O₂, O₃, O₄, O₅), la position de l'unité d'émission et de réception (S) étant enregistrée pour la position de l'objet (O₁, O₂, O₃, O₄, O₅),
- comparer les unes aux autres les données d'état reçues,
- vérifier si les données d'état d'un capteur radio (F₁, F₂, F₃, F₄, F₅) présentent un écart défini par rapport aux données d'état d'autres capteurs radio (F₁, F₂, F₃, F₄, F₅),
- dans le cas où des données d'état n'ont pas été reçues pour tous les objets (O₁, O₂, O₃, O₄, O₅) et/ou dans le cas où les données d'état d'un capteur radio (F₁, F₂, F₃, F₄, F₅) présentent un écart défini par rapport aux données d'état d'autres capteurs radio (F₁, F₂, F₃, F₄, F₅) : générer une notification concernant les objets manquants (O₁, O₂, O₃, O₄, O₅) et/ou l'écart, et transmettre la notification à un utilisateur.
